(19) Europäisches Patentamt
European Patent Office
Office européen des brevets

(11) EP 1 455 000 B1

(12) **FASCICULE DE BREVET EUROPEEN**

(45) Date de publication et mention de la délivrance du brevet:
**25.10.2006 Bulletin 2006/43**

(51) Int Cl.:
***C23C 22/02*** *(2006.01)* ***C23C 22/48*** *(2006.01)*
***C25D 11/00*** *(2006.01)*

(21) Numéro de dépôt: **04004352.3**

(22) Date de dépôt: **09.02.2001**

(54) **Matériau métallique dont la surface est modifiée, son procédé de préparation et utilisation du matériau modifié**

Oberflächenmodifiziertes metallisches Material, Verfahren zur Herstellung und Verwendung des Materials

Surface modified metallic material, method for preparing it and use of said material

(84) Etats contractants désignés:
**AT BE CH CY DE DK ES FI FR GB GR IE IT LI LU MC NL PT SE TR**

(30) Priorité: **11.02.2000 FR 0001716**

(43) Date de publication de la demande:
**08.09.2004 Bulletin 2004/37**

(62) Numéro(s) de document de la (des) demande(s) initiale(s) en application de l'article 76 CBE:
**01907754.4 / 1 255 877**

(73) Titulaire: **UNIVERSITE PARIS 7 - Denis DIDEROT**
**F-75005 Paris (FR)**

(72) Inventeurs:
- **Pinson, Jean**
  **94120 Fontenay sous Bois (FR)**
- **Podvorica, Fetah**
  **94120 Fontenay sous Bois (FR)**
- **Fagebaume, Olivier**
  **75014 Paris (FR)**

(74) Mandataire: **Grosset-Fournier, Chantal Catherine et al**
**Grosset-Fournier & Demachy,**
**54, rue Saint-Lazare**
**75009 Paris (FR)**

(56) Documents cités:

| | |
|---|---|
| **EP-A- 0 061 986** | **EP-A- 0 391 365** |
| **WO-A-88/05473** | **WO-A-98/44172** |
| **GB-A- 2 336 378** | **US-A- 3 671 476** |

- **DESAI, M. N., SHAH, Y. C., GANDHI, M. H.: "The structure of amines and their inhibitive action on the corrosion of 63Cu-37Zn in HNO3" CORROSION SCIENCE, vol. 9, 1969, pages 65-70, XP002329229 PERGAMON PRESS, GREAT BRITAIN**
- **PATENT ABSTRACTS OF JAPAN vol. 1995, no. 10, 30 novembre 1995 (1995-11-30) & JP 07 173675 A (NIKKO KINZOKU KK), 11 juillet 1995 (1995-07-11)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 455 000 B1

## Description

L'invention a pour objet un matériau métallique dont la surface est modifiée, son procédé de préparation et l'utilisation du matériau modifié.

On a déjà montré que la réduction électrochimique de sels de diazonium sur une électrode de carbone permet d'attacher de manière covalente des groupes aryle à la surface du carbone.[1] Cette réaction chimique peut être effectuée non seulement en milieu aprotique dans l'acétonitrile, mais aussi en milieu aqueux acide.

Les monocouches obtenues avec une grande diversité de sels de diazonium ont été caractérisées par différentes méthodes: la voltamétrie cyclique, la spectroscopie de photoélectrons (XPS), la spectroscopie vibrationnelle (PMIRRAS -Polarization Modulation InfraRed Reflexion Absorption Spectroscopy- et spectroscopie Raman [2]), la spectroscopie de rétrodiffusion Rutherford (RBS). Le greffage a lieu sur les liaisons pendantes du carbone vitreux, mais aussi sur le plan de base du Graphite Pyrolytique Hautement Orienté (HOPG) (c'est à dire sur des carbones $sp^2$). En se basant sur la réduction bien connue des halogénures d'aryle,[3] on a attribué cette réaction de greffage au très réactif radical aryle produit lors de la réduction électrochimique des sels de diazonium. L'influence de ces couche organiques greffées sur la vitesse des transferts électroniques a été mesurée.[4] Ces monocouches organiques ont été utilisées pour attacher des enzymes redox,[1b] pour limiter l'adsorption des protéines,[5] pour différencier la dopamine de l'acide ascorbique dans les dosages électrochimiques,[6] pour contrôler des détecteurs à flux en carbone vitreux.[7] La simple réaction chimique des sels de diazonium (sans électrochimie) a permis d'attacher des groupes aryle sur des noirs de carbone pour produire des matériaux utilisables dans l'industrie des plastiques, des caoutchouc et des textiles.[8] Il est aussi possible d'obtenir des couches compactes de groupes aryle sur le silicium par réduction électrochimique de sels de diazonium sur du silicium Si (111) hydrogéné.[9]

Or à ce jour, le greffage de groupes aromatiques sur la surface de matériau métallique n'a pas été effectué.

L'invention a notamment pour objet le greffage de groupes aromatiques sur la surface de matériau métallique.

L'invention a notamment pour objet le greffage stable dans le temps, de groupes aromatiques sur la surface d'un matériau métallique.

Dans l'une de ses généralités, l'invention a pour objet un matériau métallique dont la surface est modifiée, par liaison de groupes aromatiques à ladite surface, éventuellement substitués par des groupes fonctionnels.

On a trouvé de façon inattendue que l'on pouvait former des liaisons stables métal-carbone, ledit carbone étant engagé dans un groupe aromatique.

On précise que, l'on entend par "groupe aromatique", un radical dérivé d'un composé cyclique comportant un ou plusieurs noyaux benzéniques indépendants ou condensés, et/ou un ou plusieurs noyaux complexes dérivés du benzène. Ce radical peut bien entendu comporter aussi des noyaux hétérocycliques et/ou divers substituants ainsi que des chaînes hydrocarbonées comportant éventuellement des hétéroatomes tels que N, O et S.

L'expression "matériau métallique dont la surface est modifiée par liaisons de groupes aromatiques à ladite surface" signifie que sur la surface du matériau métallique est greffée une couche qui peut avoir une épaisseur minimum d'environ 10 Å, c'est à dire être une monocouche.

De façon générale, les couches greffées sur la surface, du matériau métallique selon l'invention ont une épaisseur variant d'environ 10 Å à environ 1mm.

L'expression "groupes aromatiques éventuellement substitués par des groupes fonctionnels" signifie que les groupes aromatiques greffés peuvent subir des transformations chimiques subséquentes comme cela apparaît au cours de la description qui suit.

Dans le matériau métallique selon l'invention, la nature de la liaison entre la surface et les groupes aromatiques qui la modifient est une liaison carbone-métal de type covalent, et est notamment telle qu'elle résiste à un lavage par ultrason.

L'expression "carbone-métal de type covalent" signifie une liaison forte non ionique obtenue par recouvrement des orbitales du carbone et du métal.

Les conditions de résistance de la liaison carbone-métal à un lavage par ultrason sont décrites à titre illustratif, dans les exemples ci-après.

Selon un mode de réalisation avantageux, dans le matériau métallique selon l'invention, le groupe aromatique est un reste aromatique en $C_6$-$C_{14}$, éventuellement substitué par un ou plusieurs substituants fonctionnels ou un reste hétéroaromatique de 4 à 14 atomes, éventuellement substitué par un ou plusieurs substituants fonctionnels, comportant un ou plusieurs hétéaroatomes choisis parmi l'oxygène, l'azote, le soufre ou le phosphore.

Selon un autre mode de réalisation, dans le matériau métallique selon l'invention, le groupe aromatique comporte un ou plusieurs substituants choisis dans le groupe constitué par :

- les radicaux aliphatiques, linéaires ou ramifiés de 1 à 20 atomes de carbone, comportant éventuellement une ou plusieurs double(s) ou triple(s) liaison(s), éventuellement substitués par des radicaux carboxyles, $NO_2$, amino protégé disubstitué, amino monosubstitué protégé, cyano, diazonium, alkoxy de 1 à 20 atomes de carbone, alkoxycarbonyle de 1 à 20 atomes de carbones, alkylcarbonyloxy de 1 à 20 atomes de carbone, vinyle éventuellement fluoré ou allyle, les atomes d'halogène,

- les radicaux aryles éventuellement substitués par des radicaux carboxyles, $NO_2$, amino protégé disubstitué, amino monosubstitué protégé, cyano, diazonium, alkoxy de 1 à 20 atomes de carbone, alkoxycarbonyle de 1 à 20 atomes de carbone, alkylcarbonyloxy de 1 à 20 atomes de carbone, vinyle éventuellement fluoré ou allyle, les atomes d'halogène,

- les radicaux carboxyles, $NO_2$, amino protégé disubstitué, amino monosubstitué protégé, cyano, diazonium, alkoxy de 1 à 20 atomes de carbone, alkoxycarbonyle de 1 à 20 atomes de carbone, alkylcarbonyloxy de 1 à 20 atomes de carbone, vinyle éventuellement fluoré, les atomes d'halogène.

Selon un autre mode de réalisation, le matériau métallique selon l'invention est tel que le groupe aromatique comporte un ou plusieurs substituants susceptibles de réagir directement avec un substrat, ou un ou plusieurs substituants précurseurs qui, après transformation, sont susceptibles de réagir avec un substrat, ledit substrat étant choisi dans le groupe constitué par des résines organiques, des molécules biologiques, des molécules chimiques ou des agents complexants.

Selon un autre mode de réalisation, le matériau métallique selon l'invention est tel que le groupe aromatique comporte un ou plusieurs substituants susceptibles de réagir directement avec une résine organique et choisis dans le groupe constitué par des groupements allyliques ou vinyliques,$-(CH_2)_n$ -COOH, $-(CH_2)_n-CH_2-OH$, $(CH_2)_n-NH_2$, n étant un nombre entier compris entre 0 et 10, ou un ou plusieurs substituants précurseurs susceptibles de réagir après transformation avec une résine organique et choisis dans le groupe constitué par $NO_2$, $N_2^+$, $(CH_2)_n$-CN, $(CH_2)_n$-CHO, $(CH_2)_n$-COOPr, Pr étant un groupe protecteur, $(CH_2)_n$-NHP'r, $(CH_2)_n-N(P'r)_2$, $(CH_2)_n$-N=P"r, P'r, P"r étant des groupes protecteurs, n étant un nombre entier compris entre 1 et 10.

Selon un autre mode de réalisation dans le matériau métallique selon l'invention, le groupe aromatique comporte un ou plusieurs substituants susceptibles de réagir directement avec une molécule biologique et choisis dans le groupe constitué par $(CH_2)_n$-COOH, $(CH_2)_n-NH_2$, n étant un nombre entier compris entre 0 et 10, ou un ou plusieurs substituants précurseurs susceptibles de réagir après transformation avec une molécule biologique et choisis dans le groupe constitué par $NO_2$, $N_2^+$, $(CH_2)_n$-CN, $(CH_2)_n$-CHO, $(CH_2)_n$-COOPr, Pr étant un groupe protecteur, n étant un nombre entier compris entre 0 et 10.

Selon un autre mode de réalisation, dans le matériau métallique selon l'invention, le groupe aromatique comporte un ou plusieurs substituants susceptibles de réagir directement avec des molécules organiques fonctionnelles et choisis dans le groupe constitué par $NO_2$, $(CH_2)_n-CONH_2$, $(CH_2)_n$-CN, $(CH_2)_n$-CHO, $(CH_2)_n$-COOH, $(CH_2)_n-CH_2OH$, $(CH_2)_n-NH_2$, n étant un nombre entier compris entre 0 et 10, $SO_2H$, $SO_3H$, $SO_2R$, $SO_3R$, R étant une chaîne carbonée aliphatique ou aromatique de 1 à 20 atomes de carbone, ou un ou plusieurs substituants précurseurs susceptibles de réagir après transformation avec des molécules organiques fonctionnelles et choisis dans le groupe constitué par $NO_2$, $(CH_2)_n-CONH_2$, $(CH_2)_n$-COOPr, Pr étant un groupe protecteur, $(CH_2)_n$-NHP'r, $(CH_2)_n$-N $(P'r)_2$, $(CH_2)_n$-N=P"r, P'r, P"r étant des groupes protecteurs,$(CH_2)_n$-CN, $(CH_2)_n$-CHO, $(CH_2)_n$-COOH, $(CH_2)_n-CH_2OH$, n étant un nombre entier compris entre 0 et 10, $SO_2Pr$, $SO_3Pr$, Pr étant un groupe protecteur choisi parmi les significations de R.

Selon un autre mode de réalisation de l'invention, le groupe aromatique est choisi parmi :

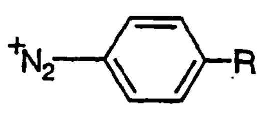

**1** R=$NO_2$
**2** R = I

**3** R = COOH
**4** R = $CH_3$
**5** R = $n$-$C_4H_9$

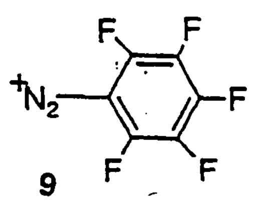

**9**

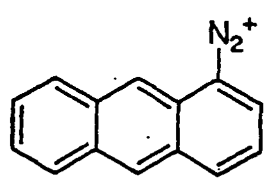

**10**

(suite)

**6** R = $n$-$C_{12}H_{25}$
**7** R = $OC_{12}H_{25}$
**8** R = $OC_{16}H_{33}$

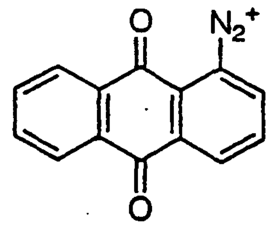

**11**

Dans ce qui suit, les sels de diazonium seront identifiés par leur numéro, comme indiqué comme ci-dessus.

Les composés suivants sont avantageusement utilisés :

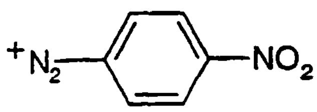

**1**

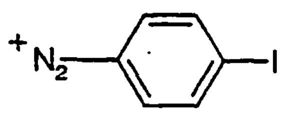

**2**

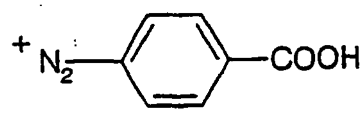

**3**

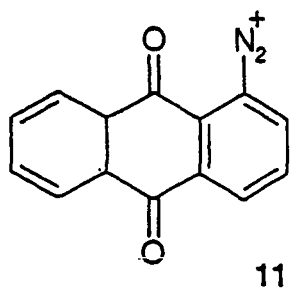

**11**

car leurs substituants peuvent être facilement caractérisés par voltamétrie cyclique ($NO_2$, quinone), par XPS ou RBS ($NO_2$, I, COOH) et PMIRRAS ($NO_2$). Les autres diazoniums ont été choisis pour leur possible propriétés hydrophobes pouvant conduire à une réduction des vitesses de corrosion.

Selon un mode de réalisation avantageux de l'invention, le métal est choisi parmi les métaux purs ou les alliages, et notamment le fer, le nickel, le platine, l'or, le cuivre, le zinc, le cobalt, le titane, le chrome, l'argent, les aciers inoxydables, les alliages de titane, les alliages de chrome cobalt, le molybdène, le manganèse, le vanadium.

Pour préparer le matériau métallique selon l'invention, on peut avoir recours à un procédé consistant à fixer sur la surface de ce matériau un groupe aromatique, par réduction électrochimique d'un sel de diazonium comportant ce groupe aromatique, en mettant en contact le matériau métallique avec une solution du sel de diazonium dans un solvant et en polarisant négativement le matériau métallique par rapport à une anode également en contact avec la solution du sel de diazonium, l'anode et la cathode pouvant être éventuellement séparées l'une de l'autre, par exemple par un diaphragme ou une membrane.

Lorsqu'on greffe des groupes aryle sur du carbone, on obtient des liaisons carbone-carbone qui sont les liaisons habituelles de la chimie organique. Sur le carbone vitreux, la liaison se fait probablement à partir des liaisons pendantes et sur du Graphite Pyrolytique Hautement Orienté par transformation d'un carbone $sp^2$ en carbone $sp^3$. Quant aux liaisons fer-carbone ou plus généralement métal-carbone, elles sont nettement moins usuelles et de plus rien ne laissait penser que la réduction du sel de diazonium sur le métal de l'électrode puisse conduire à la fixation forte de groupes aromatiques sur la surface. De plus il est inhabituel de réduire des substrats organiques sur des métaux peu nobles comme le fer ou le zinc ou même le cuivre et le titane ; quant aux métaux nobles ils sont couramment utilisés comme électrodes en électrochimie moléculaire, justement parce qu'ils ne réagissent pas avec les substrats, les intermédiaires de réaction ou les produits finaux. Le procédé de l'invention n'était donc pas envisageable, compte tenu des connaissances actuelles.

Dans ce procédé, si l'on suppose que le sel de diazonium répond à la formule $ArN^+_2X^-$ dans laquelle Ar représente le groupe aromatique du sel de diazonium et $X^-$ représente un anion, la réduction électrochimique du cation diazonium $ArN^+_2$ correspond au schéma réactionnel suivant :

$$ArN^+_2 + 1e^- \rightarrow ArN_2^\bullet \rightarrow Ar^\bullet + N_2$$

Ainsi, la réduction du cation diazonium libère le groupe aromatique du sel de diazonium sous la forme de radical libre qui peut attaquer la surface du matériau métallique pour se fixer sur celui-ci.

Le choix des sels de diazonium repose sur le fait qu'ils sont plus facilement réductibles que le radical auquel ils donnent naissance. Selon l'invention, il est donc nécessaire que le potentiel de réduction du sel de diazonium utilisé soit moins négatif que le potentiel de réduction du radical libre $Ar^\bullet$ correspondant au groupe aromatique de ce sel de diazonium.

En effet, si le potentiel de réduction du sel de diazonium était plus négatif que le potentiel de réduction du radical $Ar^\bullet$, le radical libre $Ar^\bullet$ serait réduit en $Ar^-$ lors de la réduction électrochimique du sel de diazonium et $Ar^-$ serait protoné soit par l'eau résiduelle, soit par le solvant lui-même pour former ArH, sans se fixer sur le matériau métallique.

Cette dernière condition portant sur le potentiel de réduction du sel de diazonium est remplie pour pratiquement tous les sels de diazonium.

Selon un mode de réalisation de l'invention, l'anode et la cathode ne sont pas séparées.

Dans ce cas l'anode, la cathode plongent dans la solution contenant le sel de diazonium. Deux électrodes suffisent pour travailler en mode intentiostatique. Une électrode de référence doit être ajoutée plongeant dans la même solution si on travaille en mode potentiostatique.

Selon encore un autre mode de réalisation, l'anode et la cathode sont séparées, par exemple par un diaphragme ou une membrane.

Dans ce cas, seules deux électrodes sont nécessaires dans le cas où on travaille en mode intentiostatique. Si on travaille en mode potentiostatique, il est nécessaire d'ajouter une électrode de référence dans le compartiment cathodique.

L'invention concerne également un procédé dans lequel la réduction électrochimique a lieu en présence d'un électrolyte, le compartiment anodique et cathodique étant éventuellement séparé, le compartiment anodique comportant le solvant et l'électrolyte, le compartiment cathodique comportant le solvant, l'électrolyte et le sel de diazonium.

La réduction électrochimique peut avoir lieu en présence d'un électrolyte.

Selon cette configuration, l'anode et la cathode peuvent ne pas être séparées.

Toutes deux plongeant dans la solution. Deux électrodes suffisent en mode intentiostatique. Une électrode de référence doit être ajoutée en mode potentiostatique.

Selon un autre mode de réalisation de l'invention, l'anode et la cathode peuvent être séparées, par une membrane ou un diaphragme. Deux électrodes suffisent en mode intentiostatique. Par contre, en mode potentiostatique, il est nécessaire d'ajouter une électrode de référence dans le compartiment cathodique.

Selon un mode de réalisation avantageux, dans le procédé selon l'invention, le sel de diazonium répond à la formule $ArN_2^+ X^-$, dans laquelle Ar représente le groupe aromatique et X représente un anion et en ce que ce sel de diazonium a un potentiel de réduction moins négatif que le potentiel de réduction du radical libre $Ar^\circ$ correspondant au groupe aromatique du sel de diazonium, l'anion $X^-$ du sel de diazonium étant avantageusement choisi parmi les halogènes, les sulfates, les phosphates, les perchlorates, les tetrafluoroborates, les carboxylates, les hexafluorophosphates.

Selon un autre mode de réalisation dans le procédé selon l'invention, la réduction est effectuée par voltamétrie cyclique répétitive dans un intervalle de potentiel où les sels de diazonium sont réduits ou par électrolyse à un potentiel plus négatif que le potentiel de réduction du sel de diazonium, ou à courant constant (mode intentiostatique).

Lorsque la réduction du sel de diazonium est effectuée par voltamétrie cyclique répétitive dans un intervalle de potentiel où les sels de diazonium sont réduits

On effectue des balayages successifs entre un potentiel moins négatif que la vague de réduction du sel de diazonium et un potentiel plus négatif que la vague de réduction.

Lorsque la réduction du sel de diazonium est effectuée à un potentiel plus négatif que le potentiel de réduction du sel de diazonium

On place alors le potentiel de la cathode au niveau de la vague de réduction du sel de diazonium ou à un potentiel plus négatif que le potentiel de la vague de réduction du sel de diazonium. Lorsque la réduction est effectuée en mode intentiostatique, on fixe le courant d'électrolyse à une valeur telle que seul le sel de diazonium soit réduit.

Selon un autre mode de réalisation, dans le procédé selon l'invention la concentration en sels de diazonium est comprise entre $10^{-3}$ et $10^{-1}$ mol/l.

Selon un autre mode de réalisation, dans le procédé selon l'invention de réalisation par voie électrochimique d'un matériau métallique dont la surface est modifiée par des groupes aromatiques aminés, le sel de diazonium aromatique est substitué par un radical nitro et la réduction électrochimique est maintenue jusqu'à la réduction du radical nitro en radical amino au milieu aqueux acide.

Selon un autre mode de réalisation, dans le procédé selon l'invention, la réduction électrochimique du sel de diazonium a lieu dans un solvant aprotique, notamment choisi dans le groupe comprenant l'acétonitrile, le diméthylformamide, le diméthylsulfoxyde et le benzonitrile.

Selon un autre mode de réalisation, dans le procédé selon l'invention, la solution du sel de diazonium comprend un électrolyte-support constitué par un sel d'ammonium quaternaire ou un sel de lithium, notamment un tétrafluoborate de tétralkylammonium.

Dans le procédé selon l'invention la réduction électrochimique du sel de diazonium organique peut avoir lieu dans un solvant protique en milieu acide.

Selon un autre mode de réalisation de l'invention, le solvant protique est choisi dans le groupe constitué par l'eau, le méthanol, l'éthanol ou leurs mélanges, ou en ce que le solvant protique est en mélange avec un solvant aprotique étant entendu que le mélange résultant présente les caractéristiques d'un solvant protique.

Selon un autre mode de réalisation dans le procédé selon l'invention, l'acide est choisi parmi les acides sulfurique, chlorhydrique, nitrique, nitreux, phosphorique ou tétrafluoroborique.

Dans le procédé selon l'invention, selon un autre mode de réalisation avantageux, le pH de la solution est inférieur à 2.

L'invention concerne également un matériau métallique tel qu'obtenu par mise en oeuvre du procédé décrit ci-dessus.

Le matériau métallique selon l'invention peut être caractérisé par le fait que la liaison entre sa surface et les groupes aromatiques qui la modifient est telle que, lorsqu'on effectue un balayage anodique à partir du potentiel de corrosion du métal formant la surface du matériau métallique, il existe au moins un potentiel responsable de la dissolution d'une quantité détectable du susdit métal mais qui ne détruit pas la susdite liaison.

Le matériau métallique selon l'invention peut également être caractérisé par le fait que la nature de la liaison entre sa surface et les groupes aromatiques qui la modifient est telle que, lorsqu'on applique un balayage anodique allant du potentiel de corrosion à un potentiel plus anodique d'environ 75 mV, au matériau métallique dont la surface est modifiée, il n'y a pas de rupture de la susdite liaison, mais dissolution d'une quantité détectable du métal formant la surface du matériau métallique.

Le sel de diazonium soit est préparé indépendamment et préalablement à son addition, dans un réacteur, en vue de la modification de la surface du matériau métallique, ou soit est préparé *in situ*, en mettant en présence, dans un réacteur, les composants nécessaires à sa formation, selon les méthodes classiques de l'art antérieur.

L'invention concerne également toute utilisation des matériaux métalliques définis ci-dessus et notamment les utilisations suivantes :

1- La protection des métaux contre la corrosion soit par des couches obtenues directement soit par des couches polymères obtenues à partir de substituants pouvant polymériser, par exemple:

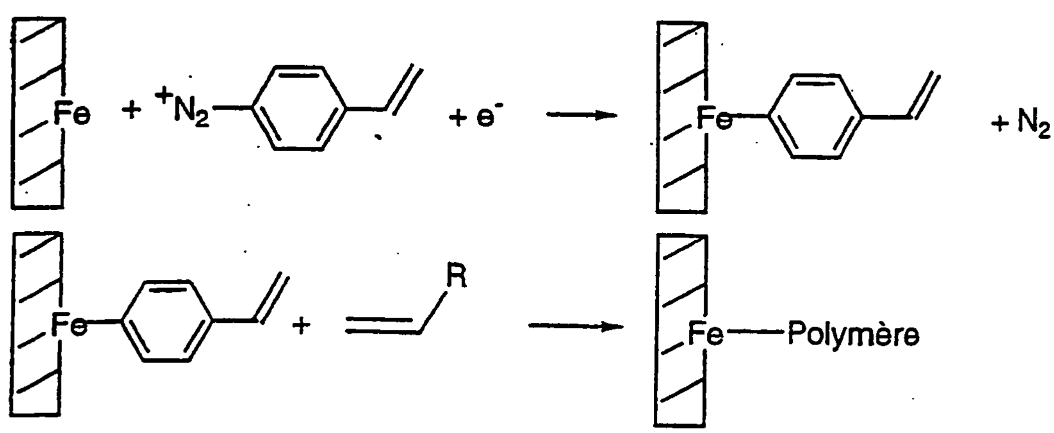

2- La lubrification en mettant sur la surface métallique des molécules améliorant les propriétés de frottement (exemple: des molécules perfluorées) ou des molécules ayant une grande affinité pour le lubrifiant (exemple des longues chaînes alkanes ayant une affinité pour les huiles et graisses minérales)

3. L'adhésion de deux surfaces métalliques chacune étant modifiée par le procédé ci-dessus, les groupes R et R' pouvant réagir l'un sur l'autre de manière chimique.

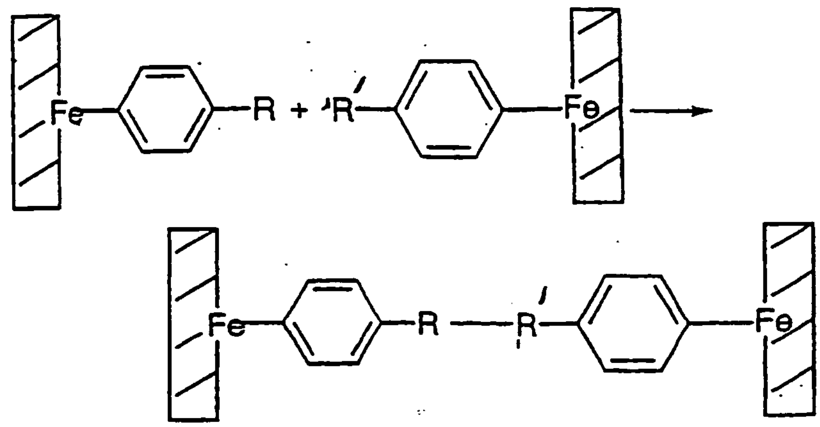

4- L'amélioration des biomatériaux en recouvrant la surface métallique (titane, alliages de titane, acier inoxydable, alliages chrome cobalt) par exemple par:

- par des chaînes de type polyéthylèneglycol substituant le noyau aromatique qui empêcheraient l'adhésion des protéines.
- des protéines telles que la protéine morphogénique osseuse (Bone Morphogenic Protein) susceptible de stimuler la croissance osseuse.
- par des antibiotiques substituant le groupe aromatique pour former des surfaces bactéricides.

**Légende des figures**

Dans ce qui suit, les abréviations ont les significations suivantes :

ECS : électrode au calomel saturé
d : diamètre de l'électrode
v : vitesse de balayage
ACN: acétonitrile
c : concentration
$Z_{Im}$ : partie imaginaire de l'impédance
$Z_{Re}$ : partie réelle de l'impédance

Figures 1a, 1b, 1c. Voltamogramme cyclique dans l'ACN + 0.1 M $NBu_4BF_4$ a) du nitrobenzène (concentration = 2 mM) sur une électrode de carbone vitreux, b) sur une électrode de fer et c) d'une électrode de fer modifiée par des groupes 4-nitrophényle v = 0.2V/s. Référence ECS.

Figures 2a, 2b. Voltamogramme cyclique de a) une électrode de fer modifiée par des groupes anthraquinone et transférée dans une solution ACN + 0.1 M $NBu_4BF_4$ et b) une électrode de fer dans une solution ACN + 0.1 M $NBu_4BF_4$ + 3mM anthraquinone v = 0.2 V/s. Référence ECS.

Figure 3a, 3b. Voltamogrammes cycliques dans une solution ACN + 0.1 M $NBu_4BF_4$ sur une électrode de fer de d = 3mm a) qui a été modifiée par des groupes anthraquinone dans $H_2SO_4$ 0.1N et b) dans une solution 2mM d'anthraquinone (l'électrode a été préalablement immergée pendant cinq minutes dans $H_2SO_4$ 0.1N puis rincée).

Figures 4a, 4b, 4c. Spectres PMIRRAS de plaques d'acier doux a) polie, b) modifiées dans l'ACN par des groupes 4-nitrophényle et c) modifiées dans $H_2SO_4$ 0.1 N par des groupes 4-nitrophényle.

Figure 5. Spectre RBS d'une plaque d'acier doux modifiée (dans ACN + 0.1 M $NBu_4BF_4$) par des groupes 4-iodophényle.

Figures 6a, 6b, 6c, 6d. Spectres XPS de: a) une plaque d'acier doux propre, b) une plaque d'acier doux greffée par des groupes 4-nitrophényle, c) par des groupes 4-carboxyphényle et d) par des groupes 4-iodophényle.

Figure 7. Diagramme d'impédance dans $H_2SO_4$ 0.1N de a) une électrode de fer et b) une électrode de fer modifiée par des groupes 4-hexadecyloxyphényl.

Figures 8a, 8b, 8c. Voltamogrammes dans ACN + 0.1M $NBu_4BF_4$ de a) une électrode de carbone dans une solution d'anthracène (concentration = 2mM), b) une électrode de zinc dans une solution d'anthracène (concentration = 2mM) et c) une électrode de zinc greffée (dans ACN + 0.1M $NBu_4BF_4$ + 2 mM 10) par des groupes anthracényle. v = 0.2 V/s.

Figures 9a, 9b. Voltamogramme dans ACN + 0.1M $NBu_4BF_4$ a) d'une électrode de carbone en présence de nitrobenzène, b) d'une électrode de zinc greffée (dans ACN + 0.1M $NBu_4BF_4$ + 2 mM 1) par des groupes 4-nitrophényle.

Figures 10a, 10b.Voltamétrie cyclique sur une électrode de cuivre dans une solution ACN + 0.1M $NBu_4BF_4$ a) en présence d'anthraquinone (concentration =2 mM) et b) après greffage de l'électrode (dans ACN + 0.1M $NBu_4BF_4$ + 2 mM 11) par des groupes anthraquinone. Référence ECS, v= 0.2 V/s

Figures 11a, 11b. Voltamétrie cyclique sur une électrode de cuivre dans une solution ACN + 0.1M $NBu_4BF_4$ a) en présence de nitrobenzène (concentration =2 mM) et b) après greffage de l'électrode (dans ACN + 0.1M $NBu_4BF_4$ + 2 mM 1) par des groupes 4-nitrophényle. Référence ECS, v= 0.2 V/s

Figures 12a, 12b, 12c. Voltamétrie cyclique sur une électrode de nickel dans une solution ACN + 0.1M $NBu_4BF_4$ a) en présence du sel de diazonium **1** (concentration = 2mM), b) en présence de nitrobenzène (concentration = 2 mM) et c) après greffage de l'électrode (dans ACN + 0.1M $NBu_4BF_4$+ 2 mM 1) par des groupes 4-nitrophényle. Référence ECS, v= 0.2 V/s

Figures 13a, 13b. Voltamétrie cyclique d'une électrode de cobalt a) dans une solution ACN + 0.1M $NBu_4BF_4$ b) après greffage de l'électrode (dans ACN + 0.1M $NBu_4BF_4$ + 2 mM 1) par des groupes 4-nitrophényle. Référence ECS, v= 0.2 V/s.

Figures 14a, 14b, 14c. Voltamétrie cyclique sur une électrode d'or dans une solution ACN + 0.1M $NBu_4BF_4$, a) en présence du tétrafluoroborate de 4-nitrobenzènediazonium 1, b) en présence de nitrobenzène (concentration =2 mM) et c) après greffage de l'électrode (dans ACN + 0.1M $NBu_4BF_4$+ 2 mM 1) par des groupes 4-nitrophényle. Référence ECS, v= 0.2 V/s

Figures 15a, 15b, 15c. Voltamétrie cyclique sur une électrode de platine dans une solution ACN + 0.1M $NBu_4BF_4$, a) en présence du tétrafluoroborate de 4-nitrobenzènediazonium 1, b) en présence de nitrobenzène (concentration =2 mM) et c) après greffage de l'électrode (dans ACN + 0.1M $NBu_4BF_4$+ 2 mM 1) par des groupes 4-nitrophényle. Référence ECS, v= 0.2 V/s.

Figures 16a, 16b. Voltamétrie cyclique sur une électrode de titane dans une solution ACN + 0.1M $NBu_4BF_4$ a) en présence du tétrafluoroborate de 4-nitrobenzènediazonium 1 (concentration = 2mM) et b) après greffage de l'électrode (dans ACN + 0.1M $NBu_4BF_4$ + 2 mM 1) par des groupes 4-nitrophényle. Référence ECS, v= 0.2 V/s

Figures 17a, 17b, 17c. Voltamétrie cyclique sur une électrode d'acier inoxydable dans une solution ACN + 0.1M $NBu_4BF_4$, a) en présence du tétrafluoroborate de 4-nitrobenzènediazonium 1, b) après greffage de l'électrode (dans ACN + 0.1M $NBu_4BF_4$) par des groupes 4-nitrophényle. et c) en présence de nitrobenzène (concentration =2 mM). Référence ECS, v= 0.2 V/s

Figure 18. Voltamétrie cyclique dans une solution ACN+ 0.1M $NBu_4BF_4$ de a) une électrode de fer en présence d'anthracène (c = 2.5mM) et b) d'une électrode de fer greffée par des groupes anthracényle. Référence ECS v = 0.2 v/s.

Figure 19. Voltamogramme cyclique sur une électrode de fer (diamètre 1 mm) dans une solution d'ACN + 0.1 M $NBu_4BF_4$ en présence de nitrobenzène (concentration = 1 mM). Référence ECS. v = 0.1 V/s. Echelle de l'axe des abscisses : 100 mV/cm. Echelle de l'axe des ordonnées : 5 $\mu$A/cm (Exemple comparatif n° 1)

Figure 20. Voltamogramme cyclique sur l'électrode de fer précédente ; cette expérience est effectuée après l'obtention du voltamogramme de la Figure 19 et avec la même électrode que celle utilisée pour la Figure 19 (après rinçage soigneux dans une cuve à ultrasons) dans une solution d'ACN + 0.1 M $NBu_4BF_4$. Référence ECS. v = 0.1

V/s. Echelle de l'axe des abscisses : 100 mV/cm. Echelle de l'axe des ordonnées : 0,8 μA/cm (Exemple comparatif n° 1)

Figure 21A, 21B. Voltamogramme cyclique sur une électrode de fer (diamètre 1 mm) dans une solution d'ACN + 0.1 M $NBu_4BF_4$ en présence de p-nitrophénol (concentration = 1 mM). Référence ECS. v = 0.3 V/s. La courbe (A) correspond au blanc de l'électrode et la courbe (B) au voltamogramme en présence de p-nitrophénol. Echelle de l'axe des abscisses : 100 mV/cm. Echelle de l'axe des ordonnées : 0,8 μA/cm (Exemple comparatif n° 2)

Figure 22. Voltamogramme cyclique sur l'électrode précédente (voir Figures 20A et 20B) dans une solution d'ACN + 0.1 M $NBu_4BF_4$; cette expérience est effectuée après l'obtention du voltamogramme de la Figure 21B et rinçage soigneux de cette électrode dans une cuve à ultrasons. Référence ECS. (a) v = 0.1 V/s et (b) v = 0.3 V/s. Echelle de l'axe des abscisses : 100 mV/cm. Echelle de l'axe des ordonnées : 0,8 μA/cm (Exemple comparatif n° 2)

**Exemples**

**Section Experimentale**

**Produits chimiques, Electrodes.** L'ACN provient de Merck (Uvasol), $H_2SO_4$ de Prolabo (Tritrinorm) et $NBu_4BF_4$ de Fluka (puriss.). Les sels de diazonium:**1** et **11** sont d'origine commerciale (Aldrich), la synthèse de **3** a été décrite[1c]; **2, 3-6, 9, 10** ont été obtenus à partir d'amines commerciales par des méthodes standards .[27]. Les sels de diazonium sont conserves au réfrigérateur.

4-iodobenzène diazonium tétrafluroborate **2**[28]: M.p.126° C (litt. 123-124°C); $^1H$ RMN (200 MHz, DMSO): δ= 8.4 (q, 4H, aromatiques)

4-methylbenzène diazonium tétrafluroborate **4**[29]:M.p.110° C, dec (litt. 110°C, dec.); 1H RMN (200 MHz, DMSO): δ= 2.5 (q, 3H, $CH_3$), 7.8-8.5 (deux d, 4H, aromatiques).

4-n-butylbenzènediazonium tétrafluoroborate **5**[28] Dans un erlenmeyer placé dans un bain de glace, la 4-n-butyl aniline (149 mg, 1 mmol) est dissoute dans HBF4 (34%, d= 1.23, 3 mmol, 30 mL) et agitée pendant 15 minutes, on ajoute ensuite $NaNO_2$ (1.5 mmole, 103 mg). Le mélange est agité pendant 20 minutes. $CH_2Cl_2$ (30mL) est ensuite ajouté et les couches organiques et aqueuses sont séparées. La phase organique est séchée sur $MgSO_4$ et évaporée pour donner un solide jaune pâle. Comme indiqué dans la littérature, il n'est pas possible de mesurer un point de fusion[28]; $^1H$ RMN (200 MHz, DMSO):δ = 0.9 (t, $^3J$= 6Hz, 3H, $CH_3$), 0.8-2.8 (m, 5H, $CH_2$), 2.8 (t,$^3J$= 8Hz, 2H, $CH_2$ benzylique), 7.6-8.5 (q, $^3J$ = 8Hz, 4H, aromatiques).

4-n-dodecylbenzènediazonium tétrafluoroborate **6**[30] M.p.70°C, dec ; $^1H$ RMN (200 MHz, DMSO):δ = 0.85 (t, $^3J$= 6Hz, 3H, $CH_3$), 1.1-2.8 (m, 20 H, $CH_2$), 2.5 (t,$^3J$= 8Hz, 2H, $CH_2$ benzylique), 7.8-8.5 (q, $^3J$ = 8Hz, 4H, aromatiques).

Le sel de diazonium **7** a été préparé à partir de la 4-dodecyloxyaniline[31] : solide blanc, $^1H$ RMN (200 MHz, DMSO):δ = 0.8-1.8 (m, 25H,protons aliphatiques), 4.3 (t, 2H, O-$CH_2$), 7.5-8.5 (q, $^3J$ = 8Hz, 4H, aromatiques).

Le sel de diazonium **8** a été préparé de la même manière, mais le sel de diazonium contenait encore un peu d'amine solide blanc:$^1H$ RMN (200 MHz, DMSO):δ = 0.8-1.8 (m, 33H, protons aliphatiques), 4.2 (t, 2H, O-$CH_2$), 7.2-8.5 (q, $^3J$ = 8Hz, 4H, aromatiques)

Les électrodes ont été préparées à partir de fil de métaux par exemple, du fil de fer de diamètre 1mm (Johnson-Matthey 99.99%) scellés dans la résine epoxy ou à partir de boutons de fer doux de 3mm de diamètre maintenus dans un serre joint en Téflon. Les plaques d'acier doux (contenant Fe: 95.68%; C: 0.31%; Mn: 2.03%; P: 0.05%; S: 0.13%; N: 0.56%; Si: 0.10%; Cu: 0.07%; Ni: 0.18%; Cr: 0.30%; Sn: 0.01%; Al: 0.58%) ont été données par la Société Sollac.

Équipement électrochimique : Les courbes électrochimiques ont été obtenues grâce à un potentiostat construit au laboratoire ou à un système Versastat II de EGG. Les mesures d'impédance ont été obtenues avec un potentiostat EGG 263A et un amplificateur lock-in 5210 EGG. Les fréquences explorées ont varié de 0.001 Hz à 20 kHz et les courants de corrosion ont été obtenus à partir des droites de Tafel avec un logiciel de corrosion EGG.

Caractérisation des surfaces: Les équipements XPS , PMIRRAS et RBS et les conditions d'utilisation ont été décrits précédemment [1c].

**Exemple I**

Greffage du Fer

**Preuves électrochimiques du greffage.** On a étudié la réaction de greffage à la fois en milieu aprotique [Acétonitrile (ACN) + 0.1 M $NBu_4BF_4$] et en milieu aqueux acide (les sels de diazonium ne sont pas stables en milieu aqueux au-dessus de pH 2). Dans l'ACN + 0.1 M $NBu_4BF_4$ une électrode de fer présente un domaine d'électroactivité qui est compris entre -0.1 et -2.3V/ECS ; dans l'acide sulfurique dilué (0.1 N) ce domaine est réduit à néant. Le potentiel

en circuit ouvert (potentiel de corrosion)[10] est situé à -0.58 V/ECS il correspond à un potentiel mixte puisque les réactions de réduction et d'oxydation sont différentes. Le courant partiel anodique ou cathodique qui circule à ce potentiel s'appelle le courant de corrosion ($I_{corr}$). Dés que le potentiel est déplacé vers les potentiels positifs, le courant d'oxydation du fer prédomine alors que c'est la réduction des protons ou de l'oxygène qui prédomine lorsqu'on déplace le potentiel vers les valeurs négatives [11]. Il faut rappeler que même au potentiel de corrosion, où le courant est nul les phénomènes d'oxydation du fer et de réduction des protons et/ou de l'oxygène ont lieu simultanément. Au potentiel de corrosion les deux courants sont égaux. Le domaine d'électroactivité est donc tout à fait différent de celui d'une électrode de carbone et il n'est pas toujours possible, comme nous l'avons décrit précédemment,[1] d'observer la vague de réduction des sels de diazonium située vers 0 V/ECS.

Dans l'ACN, la seule manière générale de greffer des groupes aryle sur la surface du fer est de fixer le potentiel à une valeur plus négative que -0.5 V/ECS dans une solution contenant le sel de diazonium et à une valeur proche du potentiel de corrosion dans $H_2SO_4$ 0.1N (nous verrons plus loin qu'il est possible de déterminer un potentiel optimal de -0.75 V/ECS dans ce solvant). Ce faisant, on suppose que les sels de diazonium sont réduits à des potentiels voisins sur carbone et sur fer. Le potentiel de réduction des sels de diazonium et le potentiel d'oxydation de fer en milieu aqueux rend thermodynamiquement possible la réduction des sels de diazonium par le fer. On verra plus loin que les mesures XPS montrent que cette réaction spontanée est négligeable pour le greffage sur le fer, mais on a observé un greffage spontané sur l'acier inoxydable.

On a étudié la réduction du tétrafluoroborate de 4-nitrobenzènediazonium 1 qui, sur carbone, conduit au greffage de groupes 4-nitrophényle. Ces groupes sont aisément caractérisés par leur vague de réduction réversible en milieu aprotique qui est située au même potentiel que celle du nitrobenzène. Nous avons tout d'abord enregistré le voltamogramme cyclique du nitrobenzène dans l'ACN + 0.1 M $NBu_4BF_4$ sur une électrode de fer; on observe deux vagues à -1.22 and -1.75 V/ECS (non montré), la hauteur de la seconde étant à peu près le double de la première. La première vague est réversible puisqu'une vague anodique est observée à -1.00 V/ECS lors du balayage retour. Le potentiel standard du nitrobenzène peut donc être mesuré: $E^\circ$ = -1.11 V/ECS. Ce voltamogramme est similaire à celui observé sur des électrodes de carbone (Figures 1a, 1b).

Ensuite, le potentiel d'une électrode est maintenu pendant 5 minutes à -0.8 V/ECS dans une solution ACN + 0.1 M $NBu_4BF_4$ contenant du sel de diazonium **1** (c = 2mM). L'électrode est ensuite soigneusement rincée dans une cuve à ultrasons pendant cinq minutes puis transférée dans une nouvelle solution ne contenant que le solvant et l'électrolytes support. Dans ces conditions, on observe une vague réversible et large ($E_{pc}$ = -1.25 V/ECS et $E_{pa}$ = -1.12 V/ECS) à un potentiel très proche de celui du nitrobenzène lui-même (Figure 1c). Cette expérience montre clairement que les groupes 4-nitrophényle sont transférés avec l'électrode et qu'ils sont solidement fixés puisqu'ils résistent à un lavage dans une cuve à ultrasons. Les Figures 2a, 2b présentent les résultats obtenus avec le sel de diazonium **11** qui est un sel de diazonium commercial de l'anthraquinone. L'électrode de fer qui a été modifiée et soigneusement rincée comme ci-dessus présente un système réversible avec un pic cathodique à $E_{pc}$ = -0.93 V/ECS et un pic anodique à $E_{pa}$ = -0.88 V/ECS ce qui correspond à un potentiel standard $E^\circ$ = -0.90 V/ECS. Par comparaison, l'anthraquinone présente sur une électrode de fer système électrochimique lent ($E_{pc}$ = -1.08 V/ECS et $E_{pa}$ = -0.75 V/ECS) à $E^\circ$ = -0.91 V/ECS, c'est à dire, au même potentiel que l'électrode modifiée. Cette expérience confirme les observations faites avec le sel de diazonium **1**. De plus, la forme symétrique du voltamogramme indique un système redox sans diffusion de et vers l'électrode comme on pouvait s'y attendre pour des groupes greffés à la surface de l'électrode. Il faut aussi remarquer la grande stabilité du système au cours des balayages successifs. Des résultats similaires ont été obtenus avec des groupes anthracényles liés à la surface par réduction du sel de diazonium **10** (Figure 18).

La modification électrochimique d'une électrode de carbone vitreux par des groupes 4-nitrophényle a été précédemment réalisée par réduction du sel de diazonium **1** dans $H_2SO_4$ dilué et le signal des groupes 4-nitrophényle observé dans une solution ACN + 0.1 M $NBu_4BF_4$. Un tel résultat ne peut pas être observé avec une électrode de fer qu'on a modifiée par réduction du sel de diazonium **1**. Ceci est du au fait que pendant l'électrolyse du sel de diazonium **1** en milieu acide au potentiel de greffage, E = -0.75 V/ECS le groupe nitro est réduit en amine (le voltamogramme du nitrobenzène sur une électrode de carbone vitreux dans les même conditions que ci-dessus correspond au transfert de 6e- +$6H^+$), une fonction qui ne peut être réduite électrochimiquement et n'est donc pas observable par voltamétrie cyclique. Cependant, une électrode de fer modifiée par réduction du sel de diazonium **11** à E = -0.5 V/ECS dans $H_2SO_4$ 0.1 N, soigneusement rincée et transférée dans une solution ACN + 0.1 M $NBu_4BF_4$ présente un voltamogramme faiblement réversible ($E_{pc} \approx$ -0.9 V/ECS et $E_{pa} \approx$ -0.6 V/ECS) à $E^\circ \approx$ -0.7 V/ECS. Ce voltamogramme (Figure 3) est semblable à celui de l' anthraquinone dans ACN + 0.1 M $NBu_4BF_4$ sur une électrode de fer préalablement maintenue dans une solution $H_2SO_4$ 0.1 N pendant cinq minutes. Ces expériences en milieu acide montrent qu'il est possible de greffer des groupes aryles sur la surface du fer mais les voltamogrammes obtenus sont différents de ceux obtenus par greffage dans l'ACN. Ceci apparaît à travers une perte de réversibilité et un transfert électronique plus lent. La perte de réversibilité peut être due à des espèces acides transférées avec l'électrode en dépit d'un rinçage vigoureux.

La modification de la surface du fer par réduction de sels de diazonium est donc possible dans l'ACN et les solutions aqueuses acides, mais elle est plus facilement observée dans l'ACN. Ces résultats ont ensuite été confirmés

par d'autres méthodes.

**Spectres de vibration de la couche organique** : Comme dans le cas des monocouches organiques sur carbone il est difficile d'obtenir des spectres infrarouges de monocouches par réflexion. Cependant, ceci peut être réalisé par PMIRRAS (Polarization Modulation InfraRed Absorption Spectroscopy.[12]) Les spectres ont été enregistrés sur des plaques d'acier doux (matériau industriel qu'il est intéressant de protéger contre la corrosion). Avant greffage, les plaques ont été soigneusement polies et rincées en l'absence d'oxygène dans une cuve à ultrasons. Une plaque non greffée présente des absorptions à 1050-1100 $cm^{-1}$ qui sont caractéristiques des oxydes ainsi que des absorptions à 1400 et 1600-1700 $cm^{-1}$ qui correspondent aux carbonates et aux hydrogénocarbonates (qui proviennent probablement de réaction avec le dioxyde de carbone atmosphérique après greffage) (Figure 4a). Après greffage par le sel de diazonium **1** dans une solution ACN + 0.1 M $NBu_4BF_4$ les vibrations symétriques et antisymétriques du groupe $NO_2$ [13] sont clairement visibles à 1350 et 1522 $cm^{-1}$ de même que les absorptions du groupe aromatique à 1263 et 1600 $cm^{-1}$ (Figure 4b). Les pics des oxydes sont visibles, mais ceux des carbonates ont disparus. Si le greffage est effectué dans l'acide sulfurique 0.1N, une forte bande est observée à 1180 $cm^{-1}$ qui peut être due à une couche d'oxyde plus épaisse ou à la présence de sulfates, cependant, le signal du groupe $NO_2$ est toujours observable (Figure 4c).

**Spectres de Rétrodiffusion Rutherford (RBS) :** Cette méthode qui mesure le nombre d'ions $He^+$ rétrodiffusés à une énergie donnée permet de caractériser la présence sur la surface d'un type donné d'atomes ainsi que leur nombre. Il est cependant nécessaire que le nombre atomique de l'atome à identifier soit supérieur à celui du fer. Pour remplir cette condition nous avons greffé des plaques d'acier doux soigneusement polies par réduction du tétrafluoroborate de 4-iodobenzenediazonium dans l'ACN. La Figure 5 présente le spectre de cette plaque. Le tableau 1 montre le résultat de différentes expériences en fonction du solvant et du potentiel. Le seul pic observé en dehors de celui du fer correspond aux atomes d'iode, ce qui confirme bien le greffage de la molécule iodée. De plus, l'analyse montre que le greffage est homogène sur toute la surface de l'échantillon et reste stable sous le faisceau d'ions. Dans l'acide sulfurique dilué la valeur optimale du potentiel est de -0.75 V/ECS correspondant à une concentrations surfacique maximale; à des potentiels plus positifs le greffage entre en compétition avec l'oxydation de la surface et avec la réduction des protons à des potentiels plus négatifs. Les concentrations surfaciques seront discutées plus loin.

**Spectroscopie de Photoelectrons X (XPS):** Il faut noter que les spectroscopies RBS et XPS sont des méthodes d'analyse de surface complémentaires puisque la profondeur d'échantillonnage de la première est environ deux ordres de grandeur plus faible que celle de la seconde. Les Figures 6a, 6b, 6c, 6d montrent le spectre complet d'une plaque d'acier doux (Figure 6a) et de plaques greffées par des groupes 4-nitrophényle (Figure 6b), 4-carboxyphényle (Figure 6c) et 4-iodophényle (Figure 6d).Tous ces spectres généraux montrent les pics $C_{[1s]}$, $O_{[1s]}$, $F_{[2p]}$ à des énergies de 285, 530 et 710 eV. La Figure 6b montre clairement le greffage du sel de diazonium **1** après traitement électrochimique. Ce greffage se traduit par un net accroissement de l'intensité relative du pic C[1s] et par un petit pic à environ 400eV. L'agrandissement de cette région met en évidence deux pics centrés à 400 et 406 eV, ce dernier correspondant au groupe nitro alors que le premier peut être du soit à une contamination soit à des produits de réduction du groupe nitro. Il faut remarquer que le pic O[1s] a été ajusté avec une composante à 533 eV, une énergie caractéristique de l'oxygène d'un groupe nitro [14], en même temps qu'avec une composante à plus faible énergie de liaison due aux oxydes de fer. Après réduction du tétrafluoroborate de 4-carboxybezenediazonium **3**, le spectre de la plaque d'acier doux présente un pic $C_{(1s)}$ à 289 eV en même temps que des signaux $O_{(1s)}$ à 531 et 532 eV respectivement attribués au carbone et à l'oxygène du C=O et du OH du groupe carboxylique ainsi qu'un pic $F_{[1s]}$ vers 690eV du à une contamination de surface par des ions $BF_4$- de l'électrolyte (Figure 6c). Lorsque la plaque d'acier doux est modifiée par des groupes 4-iodophényle le signal de l'atome d'iode peut être observé à 621 eV (4.2%) (Figure 6d). Le rapport C/I de 6.25 est proche de ce qu'on peut attendre pour un groupe iodophényle. De façon à vérifier que la présence des groupes organiques sur la surface n'est pas du à une simple adsorption ou à une simple réaction chimique, la même plaque d'acier doux polie et nettoyée comme précédemment a été trempée dans une solution du sel de diazonium **2** dans l'ACN + 0.1 M $NBu_4BF_4$. Dans ces conditions on observe un faible signal correspondant à l'iode (0.45%). Ce faible signal peut être du à une réaction spontanée du sel de diazonium **2** par le fer comme nous l'avons expliqué ci-dessus. Il faut noter l'atténuation de l'intensité du pic du $Fe_{[2p]}$ par la couche organique greffée par réduction du sel de diazonium **1, 2** ou **3**. On observe aussi un accroissement notable du bruit de fond, particulièrement dans le cas du greffage du sel de diazonium **2**. Cette molécule semble avoir un fort pouvoir couvrant puisqu'on n'observe plus le doublet du $Fe_{[2p]}$ sur le spectre général. A sa place, on observe dans la région 700-1000 eV à un bruit de fond élevé correspondant à une perte accrue d'énergie inélastique.

Les spectres XPS ont aussi été utilisés pour vérifier que le greffage avait bien lieu sur la surface du fer et non sur l'oxyde qui peut toujours être présent sur la surface. Deux plaques on été passivées dans $H_2SO_4$ 1N en balayant le potentiel jusqu'à +1V/ECS (un potentiel situé dans la zone de passivation du fer); la passivation par la couche d'oxyde peut alors être observée par une augmentation du pic de l'oxygène d'environ 20% à environ 40%). L'une d'entre elles est trempée dans une solution du sel de diazonium **2** dans ACN + 0.1 M $NBu_4BF_4$ tandis que l'autre a été greffée comme précédemment dans la même solution. Dans les deux cas on n'observe qu'un faible signal de l'iode correspondant respectivement à 0.3 et 0.4%. Ces signaux sont beaucoup plus petit que ceux observés (4.2%) sur une plaque polie et

préalablement nettoyée puis greffée comme ci-dessus. Ceci indique clairement que le greffage des groupes aryle a bien lieu sur le fer et non sur la couche d'oxyde.

**Capacité de l'électrode** : L'attachement d'une couche organique à la surface de l'électrode devrait faire diminuer la capacité de cette électrode en ajoutant une couche isolante supplémentaire en série avec la double couche. La capacité peut être mesurée par une méthode d'impédance; nous avons enregistré le diagramme de Nyquist ($Z_{Im}$ vs $Z_{Re}$) (Figure **7**). Il est alors possible à partir de la fréquence du maximum d'obtenir $C_d$ [15]. La capacité d'une électrode de fer pur de 3mm de diamètre dans $H_2SO_4$ 0.1N est de 207 $\mu$F/cm$^2$. Après modification de l'électrode avec des groupes 4-hexadecyloxyphényl (par réduction du sel de diazonium **8** dans $H_2SO_4$ 0.1N) la capacité tombe à 122 $\mu$F/cm$^2$.

**Concentration surfacique des groupes greffés :** Deux méthodes peuvent être utilisées pour mesurer la concentration de surface de groupes aryle. La première nécessite de mesurer (après un rinçage complet de l'électrode et transfert de celle ci dans une solution ACN + 0.1M $NBu_4BF_4$) la charge utilisée pour réduire le groupe nitro greffé à la surface (selon un transfert monoélectronique). Ceci revient à l'intégration du voltamogramme tracé à l'aide d'une électrode modifiée par des groupes 4-nitrophényle [1]. L'une des difficultés de cette méthode est qu'elle nécessite l'estimation d'une ligne de base et du potentiel final de l'intégration. La seconde méthode est basée sur l'intégration des spectres RBS, dans ce cas, on doit être certain que seule le zone greffée de l'électrode soit incluse dans le faisceau et que la surface est stable sous le faisceau d'ions. Les deux méthodes fournissent des valeurs qui sont relatives à la surface géométrique (c'est à dire 1cm$^2$ pour une plaque de 1 cm x 1 cm) de l'électrode préalablement polie avec de la pâte à diamant de 1$\mu$m.

Les valeurs du Tableau 1 conduisent à des résultats cohérents pour des conditions comparables. Par exemple, le greffage des groupes 4-nitrophényle et 4-iodophényle, de taille comparables conduisent à des concentrations surfaciques similaires, par contre, si on accroît la taille du groupe attaché en passant du 4-iodophényle à l'anthracényle ou à l'anthracényl-9,10-dione, la concentration surfacique diminue. Lorsque le greffage est effectué dans l'ACN, les concentrations surfaciques sont supérieures aux valeurs obtenues dans $H_2SO_4$ 0.1N, ceci peut être dû à l'oxydation de la surface dans l'acide sulfurique qui diminue la surface disponible pour greffer des groupes aryles, ou bien à des atomes d'hydrogène formés sur la surface ou ayant pénétré dans le métal [16] et qui changeant les propriétés de la surface rendraient plus difficile la réaction électrochimique. Les concentrations surfaciques du Tableau 1 peuvent être comparées à celles préalablement mesurées sur carbone et en particulier sur HOPG (la surface géométrique duquel est très proche de la surface réelle).

Tableau 1 Concentration surfacique de groupes aryle [a]

| Échantillon | Solvant [c] | Potentiel d'électrolyse V/ECS | Méthode de mesure | Concentration surfacique mol/cm$^2$[a] |
|---|---|---|---|---|
| Fer +1 | ACN | -0.85 | VC | 45 $10^{-10}$ |
| Fer +11 | ACN | -0.85 | VC | 12 $10^{-10}$ |
| Fer +12 | ACN | -0.85 | VC | 8 $10^{-10}$ |
| Acier +2 | ACN | -0.85 | RBS | 48 $10^{-10}$ |
| Acier +2 | $H_2SO_4$0.1N | -0.50 | RBS | 25 $10^{-10}$ |
| Acier +2 | " | -0.65 | RBS | 22 $10^{-10}$ |
| Acier +2 | " | -0.75 | RBS | 32 $10^{-10}$ |
| Acier +2 | " | -0.85 | RBS | 15 $10^{-10}$ |
| Acier | — | — | RBS | 0 |

[a] Concentration surfacique (rapportée à la surface géométrique). [b] Matériau de l'électrode+ sel de diazonium utilisé pour le greffage. [c] Utilisé pour le greffage.

La concentration surfacique des groupes 4-nitrophényl est de 12 à 18 $10^{-10}$ mol/cm$^2$[1,2] sur HOPG, cependant sur carbone vitreux, poli dans les mêmes conditions que les plaques de fer, une valeur de 40 $10^{-10}$ mol/cm$^2$ a été obtenue par réduction du sel de diazonium **1**. Il y donc une bonne concordance entre les valeurs obtenues sur acier et sur carbone. Ce résultat a été comparé à la consommation de charge nécessaire au greffage en enregistrant les courbes chronopotentiométriques (E = f(t) à courant constant). Dans le cas du greffage du sel de diazonium **5** le premier temps de transition correspond à la réduction de la fonction diazonium. Des temps de transition pratiquement identiques ont été mesurés sur carbone et sur fer. Ceci indique que la même quantité de charge est nécessaire pour obtenir une couverture complète de l'électrode jusqu'au moment où le diazonium n'est plus réduit sur l'électrode. Sur HOPG nous avons précédemment montré que les concentrations surfaciques obtenues correspondent à une monocouche compacte de groupes aryle perpendiculaires à la surface[1], une situation stéréochimique dans laquelle le groupe 4-nitrophényle et le groupe 4-iodophényle occupent la même surface et les groupes anthracényle occupent une surface plus importante.

**Influence de la couche greffée sur la corrosion du fer et de l'acier doux.**

L'effet de la couche organique a été estimé en mesurant deux paramètres: la résistance de polarisation $R_p$ et le courant de corrosion $i_{corr}$. Avant toute mesure, les électrodes de fer où d'acier doux ont été soigneusement polies et décapées à courant cathodique constant dans $HClO_4$[17] puis laissées à stabiliser dans le milieu de mesure pendant environ trois heures au potentiel de circuit ouvert dont la valeur peut changer avec le temps[17]. Les résistances de polarisation ont été obtenues soit à partir de la pente de la courbe obtenue en balayant anodiquement et cathodiquement les potentiels à 0.1 mV/s en utilisant la méthode de Stem et Geary[18,19] soit à partir des diagrammes d'impédance. Les impédances réelles et imaginaires ont été obtenues à partir des diagrammes de Nyquist ($Z_{Im}$ en fonction de $Z_{Re}$ pour des valeurs variables de la fréquence du signal). Ces diagrammes permettent d'obtenir la résistance de polarisation à basse fréquence et la capacité au maximum de $Z_{Im}$ [20,21] (Figure 7).

Afin de diminuer les vitesses de corrosion, des sels de diazonium **(5, 6, 7, 8)** comportant de longues chaînes alkyles ont été choisies de telle façon que les longues chaînes fournissent une barrière hydrophobe qui puisse limiter la diffusion de l'oxygène et des protons. De la même manière, le composé **9** devrait constituer une barrière très hydrophobe. Les résultats sont rassemblés dans le Tableau 2.

Tableau 2. Résistance de polarisation et courants de corrosion sur des électrodes de fer ou d'acier doux modifiées.

| Echantillon | Sel [a] de diazonium | Milieu corrosif | $R_p$[b] $\Omega$ | $R_p$[c] $\Omega$ | $i_{corr}$ $\mu A/cm^2$ | $E_{corr}$ mV[d] | $R_I$.[e] |
|---|---|---|---|---|---|---|---|
| Fer | None | $H_2SO_4$ 0.1N | 1924 | 1600 | 179 | -475 | - |
| Fer | 5 | $H_2SO_4$ 0.1N | 2206 | 2307 | 117 | -520 | 35 |
| Fer | 6 | $H_2SO_4$ 0.1N | 2958 | 2721 | 101 | -523 | 44 |
| Fer | 8 | $H_2SO_4$ 0.1N | 2042 | 2610 | 84 | -541 | 53 |
| Fer | 9 | $H_2SO_4$ 0.1N | 2688 | 2500 | 125 | -527 | 30 |
| Acier | sans | $H_2SO_4$ 0.1N | 1358 | 1513 | 168 | -546 | - |
| Acier | 5 | $H_2SO_4$ 0.1N | 3198 | 4819 | 48 | -515 | 62 |
| Acier | 8 | $H_2SO_4$ 0.1N | 3126 | 3627 | 43 | -530 | 66 |
| Fer | Sans | $NaClO_4$ 5% | 4317 | 4604 | 37 | -690 | - |
| Fer | 5 | $NaClO_4$ 5% | 8205 | 9254 | 13 | -637 | 64 |
| Fer | 8 | $NaClO_4$ 5% | 7167 | 7817 | 13 | -636 | 64 |
| Fer | Sans | KCl 5% | 3353 | 4319 | 34 | -692 | - |
| Fer | 5 | KCl 5% | 8999 | 9403 | 6 | -738 | 82 |

[a] utilisé pour le greffage. [b] obtenu à partir des courbes i = f(E). [c] obtenues à partir des courbes d'impédance.[d] En mV/ECS. [e] Rendement d'inhibition.

Dans les trois milieux utilisés, on observe un accroissement de la résistance de polarisation et une baisse du courant de corrosion par greffage des surfaces de fer ou d'acier doux. Il y a une bonne corrélation entre les résultats obtenus pour la polarisation de résistance mesurée par les deux différentes méthodes. On a inclus dans le Tableau 2 le rendement d'inhibition RI calculé selon : $RI = 100\ (1 - i_{cor}^{Gref} / i_{cor})$. $/ i_{cor}$). La vitesse de corrosion est ralentie à la fois en milieu acide où les protons sont la principale espèce oxydante et en milieu neutre où l'oxygène est responsable de la corrosion. En milieu acide le potentiel de corrosion se déplace vers les potentiels cathodiques ce qui peut être attribué à une inhibition cathodique prédominante[23]. En milieu neutre le potentiel de corrosion se déplace anodiquement ce qui indique que le film organique rend plus difficile l'oxydation du fer.

Nous avons mesuré la stabilité de la couche greffée en fonction du potentiel de l'électrode. Le potentiel d'une électrode de fer modifiée par des groupes 4-iodophényle (par réduction du sel de diazonium **2** dans une solution ACN + 0.1 M $NBu_4BF_4$) a été balayé anodiquement de 75 et 150 mV à 1 mV/s à partir du potentiel de corrosion dans $H_2SO_4$ 0.1N. La surface a ensuite été examinée par XPS et RBS ; on n'observe pas de variation significative de la concentration surfacique de l'iode pour un balayage de 75mV, mais celle-ci tombe à 0 pour un balayage de 150mV. Sur une électrode d'acier doux de $0.07 cm^2$ un balayage anodique de 75 mV correspond à la consommation de 9.8 mC soit 5 $10^{-8}$ moles de fer dissoutes (ce qui a été vérifié par dosage de la solution par spectroscopie d'absorption atomique). Ceci montre que lors d'un balayage anodique les groupes organiques sont détachés de la surface en même temps que des atomes de fer.

On peut aussi comparer les résultats de l'invention avec l'adsorption sur le fer des alkanethiols à longue chaîne ($C_{12}$, $C_{18}$) soumis à l'action de l'octyltriethoxysilane de façon à accroître la longueur des chaînes et en même temps à

assurer un liaison latérale entre les chaînes.[17] Dans le cas d'un alkanethiol en C18 dans un milieu faiblement agressif comme NaCl 0.5 M, la résistance de transfert croît environ 4 fois, et environ 4,5 fois après réaction avec l'octyltriethoxysilane. Cependant l'inconvénient majeur de ce procédé est que le thiol se désorbe lentement de la surface. Cette modification de la surface n'est donc pas stable. La couche organique n'est pas solidement greffée et peut être enlevée dans une cuve à ultrasons, alors que la couche greffée selon le procédé de l'invention résiste.

Les surfaces métalliques (Fe, Ni, Pt) ont aussi été modifiées de manière covalente par réduction électrochimique de monomères vinyliques tels que l'acrylonitrile, le méthacrylonitrile ou le butènenitrile. Les films minces de polymères (≈10 à 50 nm) liés de manière covalente à la surface ont été soigneusement étudiés[24,25] et ils se sont montrés efficaces dans la protection contre la corrosion.[26]. La différence la plus notable de ce procédé avec le procédé de l'invention, est que la couche greffée est de type alkyle, le premier carbone lié au métal est un carbone saturé aliphatique alors que selon l'invention c'est un carbone aromatique qui est lié au métal. A ce point de vue, les deux procédés sont bien différents; le procédé de l'invention ne permet pas de greffer un carbone aliphatique puisque les sels de diazonium aliphatiques sont instables et le procédé faisant appel aux monomères vinyliques ne permet pas de greffer un carbone aromatique. D'autres différences sont citées ci-après. -a) l'invention permet de greffer des monocouches non polymérisées alors que la couche organique obtenue à partir de monomères vinyliques est forcément un polymère ; b) le procédé faisant appel aux monomères vinyliques implique l'utilisation d'un monomère qui polymérise, alors que l'invention permet de préformer le polymère (ce qui permet toutes les variations de structure), le mettre en solution et l'attacher ensuite par réaction chimique sur une couche organique préalablement greffée à la surface du métal c) l'invention permet de préformer un polymère possédant des groupes aminophényle, transformer ces fonctions amines en sels de diazonium puis greffer le polymère ainsi fonctionnalisé ce qui est impossible dans le cas de l'utilisation de monomères vinyliques.

Les films organiques obtenus par réduction des sels de diazonium réduisent donc la corrosion comme on le voit dans le Tableau 2; ils sont stables et résistent à une excursion anodique de 75mV.

**Exemple II**

Greffage du Zinc

Sur ce métal qui est utilisé dans les tôles d'acier doux electrozinguées pour automobiles, on a étudié le greffage des composés **1, 5, 10**. Le premier et le dernier sont facilement caractérisables alors que le sel de diazonium **5** peut fournir une protection hydrophobe du métal contre la corrosion.

Les Figures 8a, 8b, 8c montrent le voltamograme de l'anthracène (dans ACN + 0.1M $NBu_4BF_4$) sur une électrode de carbone (8a), sur une électrode de zinc (8b) et enfin d'une électrode greffée à -1.1 V/ECS dans une solution 2mM de **10** dans ACN + 0.1M $NBu_4BF_4$, soigneusement rincée dans une cuve à ultrasons et transférée dans une solution ne contenant que l'acétonitrile et le sel de fond (8c). La réduction de l'anthracène sur zinc est réversible comme sur le carbone (Epc = -2.09 V/ECS, Epa =-1.93 V/ECS, E° = -2.01 V/ECS); la vague observée après greffage est située à -2.2 V/ECS c'est à dire à un potentiel proche de celui de l'anthracène, par contre la vague a perdu presque entièrement sa réversibilité pour une raison que nous n'avons pas encore élucidée. La présence de cette vague sur l'électrode greffée et soigneusement rincée indique clairement la présence d'un groupe réductible attaché à la surface et la similarité des potentiels de pics permet d'attribuer ce signal à un groupe anthracènyle greffé sur la surface. Le même phénomène est observé si le greffage a lieu dans l'acide sulfurique dilué.

On peut observer le même phénomène en greffant le 4-nitrobenzène diazonium **1**. Les Figures 9a, 9b, montrent la vague réversible sur carbone du nitrobenzène (E° =-1.23 V/ECS) et la figure 9b une électrode de zinc greffée par des groupes 4-nitrophényle, cette vague est large, réversible et son potentiel standard est identique à celui du nitrobenzène en solution sur une électrode de carbone. Ceci indique clairement que le greffage de groupe 4- nitrophényle a bien eu lieu.

Lorsqu'une électrode de zinc greffée par des groupes 4-butylphényle (par réduction de **5**) est placée dans une solution $H_2SO_4$ 0.1N et que le potentiel est balayé anodiquement (v = 20 mV/s), le courant anodique observé est environ 30% plus faible que sur une électrode non traitée ce qui indique un certain degré de protection de la surface du zinc par la couche organique.

**Exemple III**

Greffage du Cuivre

Le cuivre s'oxyde électrochimiquement vers 0 V/ECS dans l'ACN et vers -0.15 V/ECS dans $H_2SO_4$ 0.1N, il est donc possible dans les deux milieux d'effectuer la réduction des sels de diazonium vers -0.5 V/ECS. Les Figures 10a, 10b et 11a, 11b montrent une électrode de cuivre dans respectivement une solution d'anthraquinone et de nitrobenzène puis la même électrode greffée par des groupes anthraquinone et nitrophényle. La similarité des potentiels des systèmes

réversibles témoigne du greffage du cuivre.

**Exemple IV**

Greffage du Nickel

Le nickel s'oxyde vers +0.1 V/ECS dans l'ACN et dans $H_2SO_4$ 0.1N. Il est donc possible d'effectuer un greffage des électrodes de nickel vers -0.5 V/ECS. Les figure 12a, 12b similaire aux figures 11a, 11b sur cuivre mettent en évidence le greffage sur une surface de nickel (on observe sur l'électrode greffée une prévague à un potentiel moins négatif que la vague du groupe 4-nitrophényle). La similarité des potentiels des systèmes réversibles indique que sur le nickel, le greffage a bien lieu.

**Exemple V**

Greffage du Cobalt

Le cobalt s'oxyde vers -0.2 V/ECS dans l'ACN et vers -0.3 dans $H_2SO_4$ 0.1N. Il est donc possible d'effectuer un greffage des électrodes de cobalt vers -0.5 V/ECS. Les figures 13a et 13b similaires aux Figures 11a, 11b (sur cuivre) et 12a, 12b (sur nickel) mettent en évidence le greffage sur une surface de cobalt.

**Exemple VI**

Greffage de l'Or

Sur l'or difficilement oxydable on peut observer non seulement la vague du nitrobenzène (figure 14 b) comme dans les cas précédents, mais aussi la vague de réduction du diazonium vers +0.2 V/:ECS (figure 14 a) et enfin la vague du groupe 4-nitrophenyl greffé (figure 14 c). Le greffage s'effectue donc vers 0V /ECS et la similitude des potentiels des systèmes réversibles des figures 14b et c indique clairement le greffage du groupe 4-nitrophényle sur l'or.

**Exemple VII**

Greffage du Platine

Les mêmes courbes sont observables sur platine. Le greffage effectué vers 0 V/ECS peut être confirmé par XPS comme le montre le Tableau 3: on observe clairement l'azote du groupe $NO_2$ à 406 eV qui augmente en incidence rasante, ce qui montre bien qu'il est à l'extérieur de la couche et la disparition presque totale du signal du platine, masqué par la couche organique.

Tableau 3. Spectres XPS d'une surface de platine greffée par des groupes 4-nitrophényle.

| Éléments | | $C_{1s}$ | $O_{1s}$ | $N_{1s}$ total | $N_{1s}(NO_2)$ | $Pt_{4f}$ |
|---|---|---|---|---|---|---|
| Pt nu | | 26.8 | 16.3 | 0 | 0 | 56.8 |
| Pt greffé | 1) | 64.7 | 20.7 | 14.35 | 7.2 | 0.33 |
| | 2) | 64.3 | 18.9 | 16.8 | 9.5 | 0.00 |

1) incidence normale, 2) incidence rasante.

**Exemple VIII**

Greffage du Titane

Les figures 16a, 16b présentent le voltamogramme du sel de diazonium **1** (Epc =-0.2 V/ECS) sur une électrode de titane polie (d = 1mm) dans une solution ACN + 0.1M $NBu_4BF_4$, cette vague irréversible disparaît lors du deuxième balayage (figure 16 a) comme il a été observé lors du greffage sur les surfaces de carbone. Il est donc possible d'effectuer le greffage vers -0.5 V/ECS. Après avoir été soigneusement rincée dans l'acétone dans une cuve à ultrasons, cette électrode est ensuite transférée dans une solution ne contenant que l'acétonitrile et l'électrolyte support, on observe alors le voltamogramme réversible du groupe nitrophényle greffé sur la surface à $E^\circ$ = - 1.11 V/ECS (figure 16 b), très proche de celui du nitrobenzène lui-même sur une électrode de carbone. La vague du groupe 4-nitrophényle greffé est

précédée d'une prévague, similaire à celle observée sur carbone et dont l'origine n'est pas encore élucidée.

Le spectre XPS de la surface confirme le greffage de la surface par les groupes 4-nitrophényle.

Tableau 4. Spectres XPS d'une surface de titane greffée par des groupes 4-nitrophényle.

| | Ti %<br>459 et 464 eV | C% | O% | N% |
|---|---|---|---|---|
| Plaque de titane polie | 33.5 | 23.0 | 42.6<br>533 eV 2.7 | 401 eV 1.0<br>406 eV 0 |
| Plaque de titane greffée | 14.9 | 42.0 | 38.4<br>533eV 15.3 | 401eV 1.6<br>406 eV 3.3 |

Après greffage de la plaque, on observe une diminution du signal du titane du à la présence de la couche organique, une augmentation du carbone (sur la plaque polie, le carbone provient de contaminations), une augmentation de l'oxygène du groupe nitro à 533 eV et l'apparition du signal de l'azote à 406 eV (3.3%), caractéristique du groupe nitro.

**Exemple IX**

Greffage de l'acier inoxydable

L'acier inoxydable 316 est couramment utilisé dans les prothèses. Les figures 17a, 17b, 17c présentent de la même manière le voltamogramme de **1** sur une électrode d'acier inoxydable 316 (figure 17a), des groupes 4-nitrophényle greffés par électrolyse dans ACN + 0.1M $NBu_4BF_4$ + 2 mM **1** à -0.2 V/ECS (figure 17b) et du nitrobenzène dans la même solution (figure 17c). Le spectre XPS confirme le greffage.

Tableau 5. Spectres XPS d'une surface d'acier inoxydable 316 L greffée par des groupes 4-nitrophényle.

| | Fe%<br>707 et 710eV | C% | O% | N% |
|---|---|---|---|---|
| Plaque d' acier polie | 52.4 | 17.3 | 29.1<br>533 eV 3.6 | 401 eV 1.22<br>406 eV 0 |
| Plaque d'acier greffée | 10.4 | 56.3 | 26.5<br>533 eV 12.3 | 401 eV 1.8<br>406 eV 5.0 |

Après greffage de la plaque, on observe un affaiblissement du signal du fer du à la couche organique, une augmentation du signal du au carbone, une forte augmentation du signal de l'oxygène à 533eV et du signal de l'azote à 406 eV tous deux caractéristiques du groupe nitro.

La voltamétrie cyclique et la spectroscopie XPS confirment donc bien tous deux l'existence du greffage sur l'acier inoxydable.

**EXEMPLES COMPARATIFS**

**<u>Exemple comparatif n° 1</u>**

La comparaison des Figures 19 et 20 permet de démontrer l'importance de la présence d'un groupe diazonium.

La Figure 19 est obtenue en balayant l'électrode de fer entre -0.6V et -1.8 V en présence de nitrobenzène (concentration 1 mM) dans une solution d'acétonitrile + sel de fond (0,1 M $N_4BuF_4$). On effectue ensuite vingt balayages entre les mêmes potentiels. Le procédé utilisé est le même que celui qui est utilisé pour greffer les sels de diazonium.

Ensuite, après avoir rincé l'électrode pendant 5 minutes dans de l'acétone et 5 minutes dans du chloroforme dans une cuve à ultrasons, on effectue une nouvelle expérience qui consiste à mettre en présence cette électrode avec une solution ne contenant que l'acétonitrile et le sel de fond et ne contenant pas de nitrobenzène, et à enregistrer le voltamogramme correspondant (Figure 20). On n'observe alors aucun signal : la fonction nitrobenzène n'a pas été greffée sur l'électrode et pourtant on a suivi le même procédé que celui utilisé pour greffer des sels de diazonium. Cela montre donc que la fonction diazonium est indispensable au greffage.

**Exemple comparatif n° 2**

Des expériences similaires à l'exemple comparatif n° 1 sont effectuées avec le p-nitrophénol (Figures 21 et 22).

La Figure 21B est obtenue en balayant l'électrode de fer entre -0.6V et -1.6 V en présence de p-nitrophénol (concentration 1 mM) dans une solution d'acétonitrile + sel de fond (0,1 M $N_4BuF_4$). On effectue ensuite vingt balayages entre les mêmes potentiels. Le procédé utilisé est le même que celui qui est utilisé pour greffer les sels de diazonium. (La Figure 21A correspond au blanc de l'électrode).

Puis, comme précédemment, après avoir rincé l'électrode pendant 5 minutes dans de l'acétone et 5 minutes dans du chloroforme dans une cuve à ultrasons, on effectue une nouvelle expérience qui consiste à mettre en présence cette électrode avec une solution ne contenant que l'acétonitrile et le sel de fond et ne contenant pas de p-nitrophénol, et à enregistrer le voltamogramme correspondant (Figure 22). On n'observe alors aucun signal : la fonction p-nitrophénol n'a pas été greffée sur l'électrode et pourtant on a suivi le même procédé que celui utilisé pour greffer des sels de diazonium. Cela montre donc que la fonction diazonium est indispensable au greffage.

**Conclusion**

On a montré que la réduction de sels de diazonium sur des électrodes métalliques : fer, acier doux ou inoxydable, zinc, cuivre, nickel, cobalt, titane, or ou platine conduit au greffage du groupe aryle sur la surface. La présence de ces groupes a été mise en évidence par voltamétrie cyclique, XPS, PMIRRAS, RBS ainsi que par des mesures de capacité. Ces méthodes reposent sur des principes physiques différents, la convergence des résultats obtenus démontre donc la réalité du greffage. Dans tous les cas, ce greffage résiste à un rinçage énergique dans une cuve à ultrasons indiquant l'existence de liaisons fortes au-delà de la simple adsorption. Les mesures de voltamétrie cyclique et de RBS indiquent que le film moléculaire est voisin de la monocouche. Ces couches organiques, en particulier celles qui possèdent une chaîne alkyle comme substituant présentent une certaine efficacité contre la corrosion.

**REFERENCES**

[1] a) M. Delamar, R. Hitmi, J. Pinson, J.M. Savéant, *J. Am. Chem. Soc.* **1992**, *114*, 5883-5884; b) C. Bourdillon, M. Delamar, C. Demaille, R. Hitmi, J. Moiroux, J. Pinson, *J. Electroanal. Chem.* **1992**, *336*, 113-123; c) P. Allongue, M. Delamar, B. Desbat, O. Fagebaume, R. Hitmi, J. Pinson, J.M. Savéant, *J. Am. Chem. Soc.* **1997**, *119*, 201-207; d) M. Delamar, G. Desarmot, O. Fagebaume, R. Hitmi, J. Pinson, J.M. Savéant, *Carbon* **1997**, *36*, 801-807.

[2] a) Y.C. Liu, R.L. McCreery, *J. Am. Chem. Soc.* **1995**, *117*, 11254-11259; b) P. Chen, R.L. McCreery, *Anal. Chem.* **1996**, *68,* 3958-3965; K. Ray III, R.L. McCreery, *Anal. Chem.* **1997**, *69*, 4680-4687.

[3] (a) M.D. Hawley in *Encyclopedia of Electrochemistry of the Elements, Organic Section*, *Vol XIV* (Eds.: A.J. Bard , H. Lund), Marcel Dekker, New York, **1980**, pp179-280; b) J. Pinson, J.M. Savéant in Electroorganic Synthesis, Festschrift for Manuel Baizer (Eds.:R.D. Little, N.L. Weinberg), Marcel Dekker, New York, 1991, pp. 29-44.

[4] (a) C. Saby, B. Ortiz, G.Y. Champagne, D. Bélanger, *Langmuir,* **1997**, *13,* 6805-6813; b) B. Ortiz, C. Saby, G.Y. Champagne, D. Bélanger, *Langmuir*, **1997**, *13*, 6805-6813.

[5] A.J. Downard, A.D. Roddick, *Electroanalysis*, **1995,** *7*, 376-378.

[6] A.J. Downard, A.D. Roddick, A.M. Bond, *Anal. Chim. Act.*, **1995**, *317*, 303-310.

[7] A.J. Downard, A.D. Roddick, *Electroanalysis*, **1997**, *9*, 693-698.

[8] J.A. Belmont, R.M. Amici, C.P. Galloway (Cabot Corp.) PCT WO 96 18,688 [*Chem. Abstr.***1996**, *125*, 144212t].

[9] a) C. Henry de Villeneuve, J. Pinson, M.C. Bernard, P. Allongue, *J. Phys. Chem.B,* **1997**, *101*, 2415-2420; b) P. Allongue, C. Henry de Villeneuve, J. Pinson, F. Ozanam, J.N. Chazalviel, X. Wallart, *Electrochim. Act.* **1998**, *43*, 2791-2798.

[10] C. Brett, A. Brett, *Electrochemistry*, Oxford University Press, 1993.

[11] J. O'M. Bockris, B. Yang, *J. Electrochem.Soc.* **1991**, *138*, 2237-2252.

[12] (a) T. Buffeteau, B. Desbat, J.M. Turlet, *Appl. Spectrosc.***1991**, *45*, 380-389. (b) D. Blaudez, T. Buffeteau, J.C. Cornut, B. Desbat, N. Escafre, M. Pezolat, M. Turlet *Appl. Spectrosc.* **1993**, *47*, 869-874.

[13] G. Varsanyi, S. Holly, L. Imre, *Spectrochim. Act.* **1967**, *23A*, 1205

[14] a) M.M. Chehimi, M. Delamar, *J. Electron Spectrosc. Relat. Phenom.* **1988**, *46*, C1-C4; b) B.J. Linndberg, K. Hamrin, G. Johanson, U. Gelius, A. Fahlman, C. Nordling, K. Siegbahn, *Phys. Scri..* **1970**, 1, 286-298.

[15] A.J. Bard, L.J. Faulkner, *Electrochemical Methods,* J. Wiley, New York, **1993**, p.345.

[16] J.O'M.Bockris, *Surface Electrochemistry*, Plenum, New York, **1993**, pp.745-852.

[17] K. Nozawa, N. Nishihara, K. Aramaki, *Corrosion Sci.*, **1997**, *39*, 1625-1639

[18] M. Stern, A.L. Geary, *J. Electrochem. Soc.*, **1957**, *104*, 56-63.

[19] D.D. Macdonald, *J. Electrochem. Soc.*, **1978**, *125*, 1443-1449.
[20] I. Epelboin, M. Keddam, H. Takenouti, *J. Appl. Electrochem.*, **1972**, *2*, 71-79.
[21] C. Gabrielli, M. Keddam, *Electrochim. Act.,* **1974**, *19*, 355-362.
[22] F. Mansfeld, *J. Electrochem. Soc.*, **1973**, *120*, 515-518.
[23] G. Wranglen, *Introduction to Corrosion and Protection of Metals*, Institut för Metallskydd, Stockhlom, 1972
[24] G. Lecayon, Y. Bouizem, C. Le Gressus, C. Reynaud, C. Boiziau, C. Juret, *Chem Phys.* **1982**, *91*, 506-510.
[25] J. Charlier, C. Bureau, G. Lecayon , *J. Electroanal. Chem.* **1999**, *465*, 200-208 and Références therein.
[26] G. Deniau, G. Lecayon, C. Bureau, J. Tanguy in *Protective Coatings and Thin Films* (Eds:Y. Pauleau, P.B. Barna), Kluwer Academic, Amsterdam, 1997, pp.265-278.
[27] B.S. Furniss, A.J. Hannaford, P.W.G. Smith, A.R. Tatchell, *Vogel's Textbook of Practical Organic Chemistry*, 5th ed., Longman, London, **1989**, p. 920.
[28] S.H. Korzeniowski, A. Leopold, J.R. Beadle, M.F.Ahern, W.A. Sheppard, R.K. Khanna, G.W. Gokel, *J. Org. Chem.*, **1981**, *46*, 2153-2159.
[29] G. Balz, G. Schiemann, *Berichte*, **1927**, *60*, 1188-1190.
[30] J. Bartulin, G. Cardenas, H. Maturana, A. Ramirez, H. Zunza, Bol. Soc. Quim. Chil. Quim. **1981**, *26*, 1-5.
[31] A. Zinsou, M.Veber, H. Strzelecka, C. Jallabert, P. Fourré *New J. Chem.* **1993**, *17*, 309-313.
[32] D. Landolt, *Corrosion et Chimie de Surface des Métaux*, Presses Polytechniques et Universitaires Romandes, Lausanne, 1997, p 90.

## Revendications

**1.** Matériau métallique dont la surface est modifiée, par liaison de groupes aromatiques à ladite surface, éventuellement substitués par des groupes fonctionnels, la nature de la liaison entre la surface et les groupes aromatiques qui la modifient étant une liaison carbone-métal de type covalent, et étant notamment telle qu'elle résiste à un lavage par ultrason.

**2.** Matériau métallique selon la revendication 1, dans lequel la nature de la liaison entre sa surface et les groupes aromatiques qui la modifient est telle que lorsqu'on effectue un balayage anodique à partir du potentiel de corrosion du métal formant la surface du matériau métallique, il existe au moins un potentiel responsable de la dissolution d'une quantité détectable du susdit métal mais qui ne détruit pas la susdite liaison.

**3.** Matériau métallique selon la revendication 2, dans lequel la nature de la liaison entre sa surface et les groupes aromatiques qui la modifient est telle que lorsqu'on applique un balayage anodique allant du potentiel de corrosion à un potentiel plus anodique d'environ 75 mV, au matériau métallique dont la surface est modifiée, il n'y a pas de rupture de la susdite liaison, mais dissolution d'une quantité détectable du métal formant la surface du matériau métallique.

**4.** Matériau métallique selon l'une des revendications 1 à 3, dans lequel le groupe aromatique est un reste aromatique en $C_6$-$C_{14}$, éventuellement substitué par un ou plusieurs substituants fonctionnels ou un reste hétéroaromatique de 4 à 14 atomes, éventuellement substitué par un ou plusieurs substituants fonctionnels, comportant un ou plusieurs hétéaroatomes choisis parmi l'oxygène, l'azote, le soufre ou le phosphore.

**5.** Matériau métallique selon l'une quelconque des revendications 1 à 4, dans lequel le groupe aromatique comporte un ou plusieurs substituants choisis dans le groupe constitué par :

- les radicaux aliphatiques, linéaires ou ramifiés de 1 à 20 atomes de carbone, comportant éventuellement une ou plusieurs double(s) ou triple(s) liaison(s), éventuellement substitués par des radicaux carboxyles, $NO_2$, amino protégé disubstitué, amino monosubstitué protégé, cyano, diazonium, alkoxy de 1 à 20 atomes de carbone, alkoxycarbonyle de 1 à 20.atomes de carbones, alkylcarbonyloxy de 1 à 20 atomes de carbone, vinyle éventuellement fluoré ou allyle, les atomes d'halogène,
- les radicaux aryles éventuellement substitués par des radicaux carboxyles, $NO_2$, amino protégé disubstitué, amino monosubstitué protégé, cyano, diazonium, alkoxy de 1 à 20 atomes de carbone, alkoxycarbonyle de 1 à 20 atomes de carbone, alkylcarbonyloxy de 1 à 20 atomes de carbone, vinyle éventuellement fluoré ou allyle, les atomes d'halogène,
- les radicaux carboxyles, $NO_2$, amino protégé disubstitué, amino monosubstitué protégé, cyano, diazonium, alkoxy de 1 à 20 atomes de carbone, alkoxycarbonyle de 1 à 20 atomes de carbone, alkylcarbonyloxy de 1 à 20 atomes de carbone, vinyle éventuellement fluoré, les atomes d'halogène.

**6.** Matériau métallique selon l'une quelconque des revendications 1 à 5, dans lequel le groupe aromatique comporte un ou plusieurs substituants susceptibles de réagir directement avec un substrat, ou un ou plusieurs substituants précurseurs qui, après transformation, sont susceptibles de réagir avec un substrat, ledit substrat étant choisi dans le groupe constitué par des résines organiques, des molécules biologiques, des molécules chimiques ou des agents complexants.

**7.** Matériau métallique selon l'une quelconque des revendications 1 à 5, dans lequel le groupe aromatique comporte un ou plusieurs substituants susceptibles de réagir directement avec une résine organique et choisis dans le groupe constitué par des groupements allyliques ou vinyliques,-$(CH_2)_n$ -COOH, -$(CH_2)_n$-$CH_2$-OH, $(CH_2)_n$-$NH_2$, n étant un nombre entier compris entre 0 et 10, ou un ou plusieurs substituants précurseurs susceptibles de réagir après transformation avec une résine organique et choisis dans le groupe constitué par $NO_2$, $N_2^+$, $(CH_2)_n$-CN, $(CH_2)_n$-CHO, $(CH_2)_n$-COOPr, Pr étant un groupe protecteur, $(CH_2)_n$-NEP'r, $(CH_2)_n$-N$(P'r)_2$, $(CH_2)_n$-N=P"r, P'r, P"r étant des groupes protecteurs, n étant un nombre entier compris entre 1 et 10.

**8.** Matériau métallique selon l'une quelconque des revendications 1 à 5, dans lequel le groupe aromatique comporte un ou plusieurs substituants susceptibles de réagir directement avec une molécule biologique et choisis dans le groupe constitué par $(CH_2)_n$-COOH, $(CH_2)_n$-$NH_2$, n étant un nombre entier compris entre 0 et 10, ou un ou plusieurs substituants précurseurs susceptibles de réagir après transformation avec une molécule biologique et choisis dans le groupe constitué par $NO_2$, $N_2^+$, $(CH_2)_n$-CN, $(CH_2)_n$-CHO, $(CH_2)_n$-COOPr, Pr étant un groupe protecteur, n étant un nombre entier compris entre 0 et 10.

**9.** Matériau métallique selon l'une quelconque des revendications 1 à 5, dans lequel le groupe aromatique comporte un ou plusieurs substituants susceptibles de réagir directement avec des molécules organiques fonctionnelles et choisis dans le groupe constitué par $NO_2$, $(CH_2)_n$-$CONH_2$, $(CH_2)_n$-CN, $(CH_2)_n$-CHO, $(CH_2)_n$-COOH, $(CH_2)_{n-}CH_2OH$, $(CH_2)_n$-$NH_2$, n étant un nombre entier compris entre 0 et 10, $SO_2H$, $SO_3H$, $SO_2R$, $SO_3R$, R étant une chaîne carbonée aliphatique ou aromatique de 1 à 20 atomes de carbone, ou un ou plusieurs substituants précurseurs susceptibles de réagir après transformation avec des molécules organiques fonctionnelles et choisis dans le groupe constitué par $NO_2$, $(CH_2)_n$-$CONH_2$, $(CH_2)_n$-COOPr, Pr étant un groupe protecteur, $(CH_2)_n$-NEP'r, $(CH_2)_n$-N $(P'r)_2$, $(CH_2)_n$-N=P"r, P'r, P"r étant des groupes protecteurs,$(CH_2)_n$-CN, $(CH_2)_n$-CHO, $(CH_2)_n$-COOH, $(CH_2)_n$-$CH_2OH$, n étant un nombre entier compris entre 0 et 10, $SO_2Pr$, $SO_3Pr$, Pr étant un groupe protecteur choisi parmi les significations de R.

**10.** Matériau métallique selon l'une quelconque des revendications 1 à 9, dans lequel le groupe aromatique est choisi parmi :

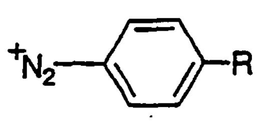

**1** R=$NO_2$
**2** R = I

**3** R = COOH
**4** R = $CH_3$
**5** R = *n*-$C_4H_9$

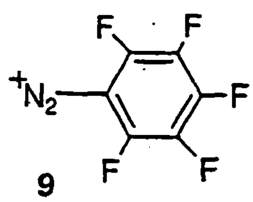

**9**

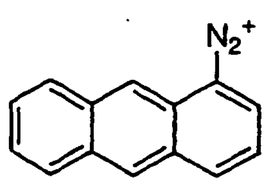

**10**

(suite)

**6** R = *n*-$C_{12}H_{25}$
**7** R = $OC_{12}H_{25}$
**8** R = $OC_{16}H_{33}$

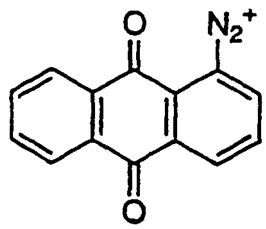

**11**

**11.** Matériau métallique selon l'une quelconque des revendications 1 à 10, dans lequel le métal est choisi parmi les métaux purs ou les alliages, et notamment le fer, le nickel, le platine, l'or, le cuivre, le zinc, le cobalt, le titane, le chrome, l'argent, les aciers inoxydables, les alliages de titane, les alliages de chrome cobalt, le molybdène, le manganèse, le vanadium.

**12.** Matériau métallique selon l'une quelconque des revendications 1 à 11, dont la surface est modifiée par une couche organique dont l'épaisseur minimum est d'environ 10 Å.

**13.** Procédé de modification de la surface d'un matériau métallique, pour obtenir un matériau métallique dont la surface est modifiée selon l'une des revendications 1 à 12, **caractérisé en ce qu'**il consiste à fixer sur la surface de ce matériau un groupe aromatique, par réduction électrochimique d'un sel de diazonium comportant ce groupe aromatique, en mettant en contact le matériau métallique avec une solution du sel de diazonium dans un solvant et en polarisant négativement le matériau métallique par rapport à une anode également en contact avec la solution du sel de diazonium, l'anode et la cathode pouvant être éventuellement séparées l'une de l'autre, par exemple par un diaphragme ou une membrane.

**14.** Procédé selon la revendication 13, **caractérisé en ce que** la réduction électrochimique a lieu en présence d'un électrolyte, le compartiment anodique et cathodique étant éventuellement séparé, le compartiment anodique comportant le solvant et l'électrolyte, le compartiment cathodique comportant le solvant, l'électrolyte et le sel de diazonium.

**15.** Procédé selon l'une des revendications 13 ou 14, **caractérisé en ce que** le sel de diazonium répond à la formule $ArN_2^+ X^-$, dans laquelle Ar représente le groupe aromatique et X représente un anion et **en ce que** ce sel de diazonium a un potentiel de réduction moins négatif que le potentiel de réduction du radical libre $Ar^{\circ}$ correspondant au groupe aromatique du sel de diazonium, l'anion $X^-$ du sel de diazonium étant avantageusement choisi parmi les halogènes, les sulfates, les phosphates, les perchlorates, les tetrafluoroborates, les carboxylates, les hexafluorophosphates.

**16.** Procédé selon une des revendications 13 à 15, **caractérisé en ce que** la réduction est effectuée par voltamétrie cyclique répétitive dans un intervalle de potentiel où les sels de diazonium sont réduits ou par électrolyse à un potentiel plus négatif que le potentiel de réduction du sel de diazonium ou à courant constant.

**17.** Procédé selon une des revendications 13 à 16, **caractérisé en ce que** la concentration en sels de diazonium est comprise entre $10^{-3}$ et $10^{-1}$ mol/l.

**18.** Procédé selon l'une des revendications 13 à 17, de réalisation par voie électrochimique d'un matériau métallique dont la surface est modifiée par des groupes aromatiques aminés, **caractérisé en ce que** le sel de diazonium aromatique est substitué par un radical nitro et **en ce que** la réduction électrochimique est maintenue jusqu'à la réduction du radical nitro en radical amino.

**19.** Procédé selon l'une des revendications 13 à 18, dans lequel la réduction électrochimique du sel de diazonium a lieu dans un solvant aprotique, notamment choisi dans le groupe comprenant l'acétonitrile, le diméthylformamide, le diméthylsulfoxyde et le benzonitrile.

**20.** Procédé selon la revendication 19, **caractérisé en ce que** la solution du sel de diazonium comprend un électrolyte-support constitué par un sel d'ammonium quaternaire ou un sel de lithium, notamment un tétrafluoborate de tétralkylammonium

**21.** Procédé selon l'une des revendications 13 à 18, dans lequel la réduction électrochimique du sel de diazonium organique a lieu dans un solvant protique en milieu acide.

**22.** Procédé selon la revendication 21, **caractérisé en ce que** le solvant protique est choisi dans le groupe constitué par l'eau, le méthanol, l'éthanol ou leurs mélanges, ou en ce que le solvant protique est en mélange avec un solvant aprotique étant entendu que le mélange résultant présente les caractéristiques d'un solvant protique.

**23.** Procédé selon une des revendications 21 ou 22, **caractérisé en ce que** l'acide est choisi parmi les acides sulfuriques, chlorhydrique, nitrique, nitreux, phosphorique ou tétrafluoroborique.

**24.** Procédé selon l'une des revendications 21 à 23, **caractérisé en ce que** le pH de la solution est inférieur à 2.

**25.** Matériau métallique tel qu'obtenu par mise en oeuvre du procédé selon l'une quelconque des revendications 13 à 24.

## Claims

**1.** A metallic material, the surface of which is modified by bonding aromatic groups to the said surface, optionally substituted by functional groups, the nature of the bond between the surface and the aromatic groups that modify it being a carbon-metal bond of covalent type, and in particular being such that it withstands ultrasonic cleaning.

**2.** Metallic material according to claim 1, in which the nature of the bond between its surface and the aromatic groups that modify the latter is such that when an anode sweep is carried out starting from the corrosion potential of the metal forming the surface of the metallic material, there is at least one potential responsible for the dissolution of a detectable quantity of the aforesaid metal but which does not disrupt the aforesaid bond.

**3.** Metallic material according to claim 2, in which the nature of the bond between its surface and the aromatic groups that modify the latter is such that when an anode sweep is applied ranging from the corrosion potential to a potential that is more anodic by about 75 mV, to the metallic material whose surface is modified, rupture of the aforesaid bond does not occur, but there is dissolution of a detectable quantity of the metal forming the surface of the metallic material.

**4.** Metallic material according to one of claims 1 to 3, in which the aromatic group is a $C_6$-$C_{14}$ aromatic residue, optionally substituted by one or more functional substituents or a heteroaromatic residue of 4 to 14 atoms, optionally substituted by one or more functional substituents, comprising one or more heteroatoms selected from oxygen, nitrogen, sulphur or phosphorus.

**5.** Metallic material according to any one of claims 1 to 4, in which the aromatic group has one or more substituents selected from the group comprising:

- linear or branched aliphatic radicals of 1 to 20 carbon atoms, optionally containing one or more double or triple bonds, optionally substituted by the following radicals: carboxyl, $NO_2$, disubstituted protected amino, monosubstituted protected amino, cyano, diazonium, alkoxy of 1 to 20 carbon atoms, alkoxycarbonyl of 1 to 20 carbon atoms, alkylcarbonyloxy of 1 to 20 carbon atoms, vinyl optionally fluorinated or allyl, halogen atoms,
- aryl radicals optionally substituted by the following radicals: carboxyl, $NO_2$, disubstituted protected amino, monosubstituted protected amino, cyano, diazonium, alkoxy of 1 to 20 carbon atoms, alkoxycarbonyl of 1 to 20 carbon atoms, alkylcarbonyloxy of 1 to 20 carbon atoms, vinyl optionally fluorinated or allyl, halogen atoms,
- the following radicals: carboxyl, $NO_2$, disubstituted protected amino, monosubstituted protected amino, cyano, diazonium, alkoxy of 1 to 20 carbon atoms, alkoxycarbonyl of 1 to 20 carbon atoms, alkylcarbonyloxy of 1 to 20 carbon atoms, vinyl optionally fluorinated, halogen atoms.

**6.** Metallic material according to any one of claims 1 to 5, in which the aromatic group has one or more substituents capable of reacting directly with a substrate, or one or more precursor substituents which, after transformation, are capable of reacting with a substrate, the said substrate being selected from the group comprising organic resins, biological molecules, chemical molecules or complexing agents.

**7.** Metallic material according to any one of claims 1 to 5, in which the aromatic group has one or more substituents that are capable of reacting directly with an organic resin and are selected from the group comprising allyl or vinyl groups, $-(CH_2)_n-COOH$, $-(CH_2)_n-CH_2-OH$, $(CH_2)_n-NH_2$, n being an integer comprised between 0 and 10, or one or more precursor substituents that are capable of reacting after transformation with an organic resin and are selected from the group comprising $NO_2$, $N_2^+$, $(CH_2)_n-CN$, $(CH_2)_n-CHO$, $(CH_2)_n-COOPr$, Pr being a protective group, $(CH_2)_n-NHP'r$, $(CH_2)_n-N(P'r)_2$, $(CH_2)_n-N=P''r$, P'r and P"r being protective groups, n being an integer comprised between 1 and 10.

**8.** Metallic material according to any one of claims 1 to 5, in which the aromatic group has one or more substituents that are capable of reacting directly with a biological molecule and are selected from the group comprising $(CH_2)_n-COOH$, $(CH_2)_n-NH_2$, n being an integer comprised between 0 and 10, or one or more precursor substituents that are capable of reacting after transformation with a biological molecule and are selected from the group comprising $NO_2$, $N_2^+$, $(CH_2)_n-CN$, $(CH_2)_n-CHO$, $(CH_2)_n-COOPr$, Pr being a protective group, n being an integer comprised between 0 and 10.

**9.** Metallic material according to any one of claims 1 to 5, in which the aromatic group has one or more substituents that are capable of reacting directly with functional organic molecules and are selected from the group comprising $NO_2$, $(CH_2)_n-CONH_2$, $(CH_2)_n-CN$, $(CH_2)_n-CHO$, $(CH_2)_n-COOH$, $(CH_2)_n-CH_2OH$, $(CH_2)_n-NH_2$, n being an integer comprised between 0 and 10, $SO_2H$, $SO_3H$, $SO_2R$, $SO_3R$, R being an aliphatic or aromatic carbon chain with 1 to 20 carbon atoms, or one or more precursor substituents that are capable of reacting after transformation with functional organic molecules and are selected from the group comprising $NO_2$, $(CH_2)_n-CONH_2$, $(CH_2)_n-COOPr$, Pr being a protective group, $(CH_2)_n-NHP'r$, $(CH_2)_n-N(P'r)_2$, $(CH_2)_n-N=P''r$, P'r and P"r being protective groups, $(CH_2)_n-CN$, $(CH_2)_n-CHO$, $(CH_2)_n-COOH$, $(CH_2)_n-CH_2OH$, n being an integer comprised between 0 and 10, $SO_2Pr$, $SO_3Pr$, Pr being a protective group selected from the meanings of R.

**10.** Metallic material according to any one of claims 1 to 9, in which the aromatic group is selected from:

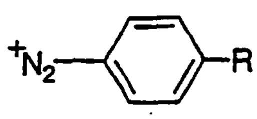

**1** $R=NO_2$
**2** $R = I$

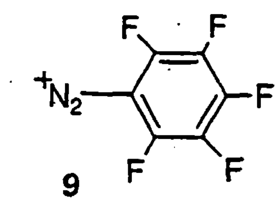

**9**

**3** $R = COOH$
**4** $R = CH_3$
**5** $R = n\text{-}C_4H_9$

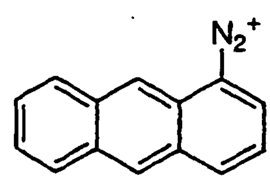

**10**

**6** $R = n\text{-}C_{12}H_{25}$
**7** $R = OC_{12}H_{25}$
**8** $R = OC_{16}H_{33}$

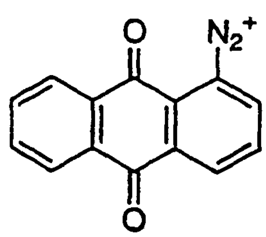

**11**

**11.** Metallic material according to any one of claims 1 to 10, in which the metal is selected from pure metals or alloys,

and in particular iron, nickel, platinum, gold, copper, zinc, cobalt, titanium, chromium, silver, stainless steels, titanium alloys, chromium-cobalt alloys, molybdenum, manganese, vanadium.

**12.** Metallic material according to any one of claims 1 to 11, the surface of which is modified by an organic layer whose minimum thickness is about 10 Å.

**13.** A method of modifying the surface of a metallic material, in order to obtain a metallic material whose surface is modified according to one of claims 1 to 12, **characterized in that** it consists of attaching an aromatic group to the surface of the said material, by electrochemical reduction of a diazonium salt containing this aromatic group, by bringing the metallic material into contact with a solution of the diazonium salt in a solvent and by negatively polarizing the metallic material relative to an anode that is also in contact with the solution of the diazonium salt, it being optionally possible for the anode and the cathode to be separated from one another, for example by a diaphragm or a membrane.

**14.** A method according to claim 13, **characterized in that** electrochemical reduction takes place in the presence of an electrolyte, the anode and cathode compartments optionally being separated, the anode compartment containing the solvent and the electrolyte, and the cathode compartment containing the solvent, the electrolyte and the diazonium salt.

**15.** A method according to one of claims 13 or 14, **characterized in that** the diazonium salt corresponds to the formula $ArN_2^+ X^-$, in which Ar represents the aromatic group and X represents an anion and **in that** this diazonium salt has a reduction potential that is less negative than the reduction potential of the free radical $Ar^{\circ}$ corresponding to the aromatic group of the diazonium salt, the anion $X^-$ of the diazonium salt being selected advantageously from the halogens, the sulphates, the phosphates, the perchlorates, the tetrafluoroborates, the carboxylates, and the hexafluorophosphates.

**16.** A method according to one of claims 13 to 15, **characterized in that** reduction is carried out by repetitive cyclic voltammetry in a potential range where the diazonium salts are reduced either by electrolysis at a potential that is more negative than the reduction potential of the diazonium salt, or at constant current.

**17.** A method according to one of claims 13 to 16, **characterized in that** the concentration of diazonium salts is between $10^{-3}$ and $10^{-1}$ mol/l.

**18.** A method according to one of claims 13 to 17, for the production by electrochemical means, of a metallic material whose surface is modified with aromatic amino groups, **characterized in that** the aromatic diazonium salt is substituted by a nitro radical and **in that** electrochemical reduction is maintained until there is reduction of the nitro radical to amino radical.

**19.** A method according to one of claims 13 to 18, in which electrochemical reduction of the diazonium salt takes place in an aprotic solvent, selected in particular from the group comprising acetonitrile, dimethylformamide, dimethylsulphoxide and benzonitrile.

**20.** A method according to claim 19, **characterized in that** the solution of the diazonium salt contains a supporting electrolyte consisting of a quaternary ammonium salt or a lithium salt, especially a tetraalkylammonium tetrafluoroborate.

**21.** A method according to one of claims 13 to 18, in which electrochemical reduction of the organic diazonium salt takes place in a protic solvent in an acid medium.

**22.** A method according to claim 21, **characterized in that** the protic solvent is selected from the group comprising water, methanol, ethanol or their mixtures, or **in that** the protic solvent is mixed with an aprotic solvent, provided the resulting mixture has the characteristics of a protic solvent.

**23.** A method according to one of claims 21 or 22, **characterized in that** the acid is selected from sulphuric, hydrochloric, nitric, nitrous, phosphoric or tetrafluoroboric acids.

**24.** A method according to one of claims 21 to 23, **characterized in that** the pH of the solution is less than 2.

**25.** A metallic material such as is obtained by application of the method according to any one of claims 13 to 24.

**Patentansprüche**

**1.** Metallisches Material, dessen Oberfläche durch Bindung aromatischer Gruppen, die gegebenenfalls mit funktionellen Gruppen substituiert sind, an diese Oberfläche modifiziert ist, wobei die Art der Bindung zwischen der Oberfläche und den diese modifizierenden aromatischen Gruppen eine kovalente Kohlenstoff-MetallBindung ist, insbesondere derart, dass sie einem Ultraschallwaschen widersteht.

**2.** Metallisches Material nach Anspruch 1, worin die Art der Bindung zwischen der Oberfläche und den diese modifizierenden aromatischen Gruppen derart ist, dass bei Durchführung eines anodischen Scans ausgehend vom Korrosionspotential des die Oberfläche des metallischen Materials bildenden Metalls mindestens ein Potential existiert, das für die Auflösung einer nachweisbaren Menge des Metalls verantwortlich ist, aber die Bindung nicht zerstört.

**3.** Metallisches Material nach Anspruch 2, worin die Art der Bindung zwischen der Oberfläche und den diese modifizierenden aromatischen Gruppen derart ist, dass es bei Anwendung eines anodischen Scans vom Korrosionspotential zu einem anodischeren Potential von etwa 75 mV auf das metallische Material, dessen Oberfläche modifiziert ist, zu keinem Bruch der Bindung kommt, aber zur Auflösung einer nachweisbaren Menge des die Oberfläche des metallischen Materials bildenden Metalls.

**4.** Metallisches Material nach einem der Ansprüche 1 bis 3, worin die aromatische Gruppe ein aromatischer Rest mit $C_6$-$C_{14}$ ist, der gegebenenfalls mit einem oder mehreren funktionellen Substituenten substituiert ist, oder ein heteroaromatischer Rest mit 4 bis 14 Atomen ist, der gegebenenfalls mit einem oder mehreren funktionellen Substituenten substituiert ist und der ein oder mehrere Heteroatome aufweist, die aus Sauerstoff, Stickstoff, Schwefel und Phosphor ausgewählt sind.

**5.** Metallisches Material nach einem der Ansprüche 1 bis 4, worin die aromatische Gruppe einen oder mehrere Substituenten aufweist, die ausgewählt sind aus der Gruppe bestehend aus:

- aliphatischen, linearen oder verzweigten Resten mit 1 bis 20 Kohlenstoffatomen, die gegebenenfalls eine oder mehrere Doppel- oder Dreifachbindungen aufweisen, gegebenenfalls substituiert sind mit Carboxylresten, $NO_2$, geschütztem disubstituiertem Amino, geschütztem monosubstituiertem Amino, Cyano, Diazonium, Alkoxy mit 1 bis 20 Kohlenstoffatomen, Alkoxycarbonyl mit 1 bis 20 Kohlenstoffatomen, Alkylcarbonyloxy mit 1 bis 20 Kohlenstoffatomen, Vinyl, das gegebenenfalls fluoriert ist, oder Allyl, Halogenatomen,
- Arylresten, die gegebenenfalls substituiert sind mit Carboxylresten, $NO_2$, geschütztem disubstituiertem Amino, geschütztem monosubstituiertem Amino, Cyano, Diazonium, Alkoxy mit 1 bis 20 Kohlenstoffatomen, Alkoxycarbonyl mit 1 bis 20 Kohlenstoffatomen, Alkylcarbonyloxy mit 1 bis 20 Kohlenstoffatomen, Vinyl, das gegebenenfalls fluoriert ist, oder Allyl, Halogenatomen,
- Carboxylresten, $NO_2$, geschütztem disubstituiertem Amino, geschütztem monosubstituiertem Amino, Cyano, Diazonium, Alkoxy mit 1 bis 20 Kohlenstoffatomen, Alkoxycarbonyl mit 1 bis 20 Kohlenstoffatomen, Alkylcarbonyloxy mit 1 bis 20 Kohlenstoffatomen, Vinyl, das gegebenenfalls fluoriert ist, Halogenatomen.

**6.** Metallisches Material nach einem der Ansprüche 1 bis 5, worin die aromatische Gruppe einen oder mehrere Substituenten, die direkt mit einem Substrat reagieren können, oder einen oder mehrere Substituenten-Vorläufer, die nach Transformation mit einem Substrat reagieren können, aufweist, wobei das Substrat aus der aus organischen Harzen, biologischen Molekülen, chemischen Molekülen oder Komplexbildnern bestehenden Gruppe ausgewählt ist.

**7.** Metallisches Material nach einem der Ansprüche 1 bis 5, worin die aromatische Gruppe einen oder mehrere Substituenten, die direkt mit einem organischen Harz reagieren können und ausgewählt sind aus der Gruppe bestehend aus allylischen oder vinylischen Gruppierungen, $-(CH_2)_n-COOH$, $-(CH_2)_n-CH_2-OH$, $(CH_2)_n-NH_2$, wobei n eine ganze Zahl zwischen 0 und 10 ist, oder einen oder mehrere Substituenten-Vorläufer, die nach Transformation mit einem organischen Harz reagieren können und ausgewählt sind aus der Gruppe bestehend aus $NO_2$, $N_2^+$, $(CH_2)_n-CN$, $(CH_2)_n-CHO$, $(CH_2)_n-COOPr$, wobei Pr eine Schutzgruppe ist, $(CH_2)_n$-NHP'r, $(CH_2)_n$-N(P'r)$_2$, $(CH_2)_n$-N=P"r, wobei P'r, P"r Schutzgruppen sind, n eine ganze Zahl zwischen 1 und 10 ist, aufweist.

**8.** Metallisches Material nach einem der Ansprüche 1 bis 5, worin die aromatische Gruppe einen oder mehrere Substituenten, die direkt mit einem biologischen Molekül reagieren können und ausgewählt sind aus der Gruppe be-

stehend aus $(CH_2)_n$-COOH, $(CH_2)_n$-$NH_2$, wobei n eine ganze Zahl zwischen 0 und 10 ist, oder einen oder mehrere Substituenten-Vorläufer, die nach Transformation mit einem biologischen Molekül reagieren können und ausgewählt sind aus der Gruppe bestehend aus $NO_2$, $N_2^+$, $(CH_2)_n$-CN, $(CH_2)_n$-CHO, $(CH_2)_n$-COOPr, wobei Pr eine Schutzgruppe und n eine ganze Zahl zwischen 0 und 10 ist, aufweist.

**9.** Metallisches Material nach einem der Ansprüche 1 bis 5, worin die aromatische Gruppe einen oder mehrere Substituenten, die direkt mit funktionellen organischen Molekülen reagieren können und ausgewählt sind aus der Gruppe bestehend aus $NO_2$, $(CH_2)_n$-$CONH_2$, $(CH_2)_n$-CN, $(CH_2)_n$-CHO, $(CH_2)_n$-COOH, $(CH_2)_n$-$CH_2OH$, $(CH_2)_n$-$NH_2$, wobei n eine ganze Zahl zwischen 0 und 10 ist, $SO_2H$, $SO_3H$, $SO_2R$, $SO_3R$, wobei R eine aliphatische oder aromatische Kohlenstoffkette mit 1 bis 20 Kohlenstoffatomen ist, oder einen oder mehrere Substituenten-Vorläufer, die nach Transformation mit funktionellen organischen Molekülen reagieren können und ausgewählt sind aus der Gruppe bestehend aus $NO_2$, $(CH_2)_n$-$CONH_2$, $(CH_2)_n$-COOPr, wobei Pr eine Schutzgruppe ist, $(CH_2)_n$-NHP'r, $(CH_2)_n$-N(P'r)$_2$, $(CH_2)_n$-N=P"r, wobei P'r, P"r Schutzgruppen sind, $(CH_2)_n$-CN, $(CH_2)_n$-CHO, $(CH_2)_n$-COOH, $(CH_2)_n$-$CH_2OH$, wobei n eine ganze Zahl zwischen 0 und 10 ist, $SO_2Pr$, $SO_3Pr$, wobei Pr eine aus den Bedeutungen von R ausgewählte Schutzgruppe ist, aufweist.

**10.** Metallisches Material nach einem der Ansprüche 1 bis 9, worin die aromatische Gruppe ausgewählt ist aus:

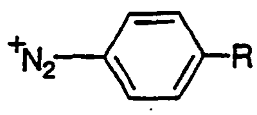

**1** R=$NO_2$
**2** R = I

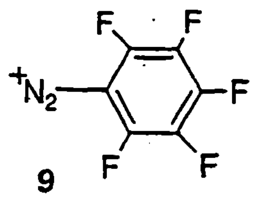

**9**

**3** R = COOH
**4** R = $CH_3$
**5** R = *n*-$C_4H_9$

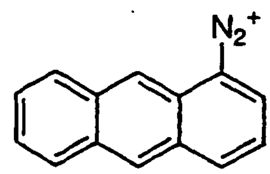

**10**

**6** R = *n*-$C_{12}H_{25}$
**7** R = $OC_{12}H_{25}$
**8** R = $OC_{16}H_{33}$

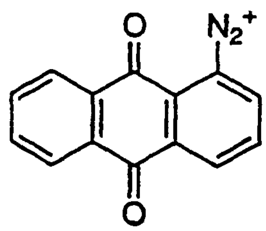

**11**

**11.** Metallisches Material nach einem der Ansprüche 1 bis 10, wobei das Metall aus reinen Metallen und Legierungen ausgewählt ist, insbesondere aus Eisen, Nickel, Platin, Gold, Kupfer, Zink, Cobalt, Titan, Chrom, Silber, Edelstahl, Titanlegierungen, Cobalt-Chrom-Legierungen, Molybdän, Mangan, Vanadium.

**12.** Metallisches Material nach einem der Ansprüche 1 bis 11, wobei die Oberfläche durch eine organische Schicht modifiziert ist, deren Mindestdicke etwa 10 Å ist.

**13.** Verfahren zum Modifizieren der Oberfläche eines metallischen Materials, um ein metallisches Material mit modifizierter Oberfläche nach einem der Ansprüche 1 bis 12 zu erhalten, **dadurch gekennzeichnet, dass** es umfasst:

Fixieren einer aromatischen Gruppe an der Oberfläche des Materials durch elektrochemische Reduktion eines diese aromatische Gruppe aufweisenden Diazoniumsalzes, indem das metallische Material mit einer Lösung des Diazoniumsalzes in einem Lösungsmittel in Kontakt gebracht und das metallische Material in Bezug auf eine ebenfalls mit der Lösung des Diazoniumsalzes in Kontakt stehende Anode negativ polarisiert wird, wobei die Anode und die Kathode gegebenenfalls voneinander getrennt sein können, beispielsweise durch ein Diaphragma oder eine Membran.

**14.** Verfahren nach Anspruch 13, **dadurch gekennzeichnet, dass** die elektrochemische Reduktion in Gegenwart eines Elektrolyten stattfindet, wobei der Anodenraum und der Kathodenraum gegebenenfalls getrennt sind, wobei der Anodenraum das Lösungsmittel und den Elektrolyten aufweist, der Kathodenraum das Lösungsmittel, den Elektrolyten und das Diazoniumsalz aufweist.

**15.** Verfahren nach einem der Ansprüche 13 oder 14, **dadurch gekennzeichnet, dass** das Diazoniumsalz die Formel $ArN_2^+X^-$ hat, worin Ar die aromatische Gruppe und X ein Anion repräsentiert, und dass das Diazoniumsalz ein Reduktionspotential hat, das weniger negativ ist als das Reduktionspotential des freien Radikals $Ar^\circ$, das der aromatischen Gruppe des Diazoniumsalzes entspricht, wobei das Anion $X^-$ des Diazoniumsalzes zweckmäßigerweise ausgewählt ist aus den Halogenen, Sulfaten, Phosphaten, Perchloraten, Tetrafluoroboraten, Carboxylaten, Hexafluorphosphaten.

**16.** Verfahren nach einem der Ansprüche 13 bis 15, **dadurch gekennzeichnet, dass** die Reduktion durch repetitive zyklische Voltammetrie in einem Potentialintervall, wo die Diazoniumsalze reduziert werden, oder durch Elektrolyse bei einem negativeren Potential als dem Reduktionspotential des Diazoniumsalzes oder bei konstantem Strom durchgeführt wird.

**17.** Verfahren nach einem der Ansprüche 13 bis 16, **dadurch gekennzeichnet, dass** die Konzentration an Diazoniumsalzen zwischen $10^{-3}$ und $10^{-1}$ mol/l beträgt.

**18.** Verfahren nach einem der Ansprüche 13 bis 17 der Realisierung eines metallischen Materials, dessen Oberfläche durch aminierte aromatische Gruppen modifiziert ist, auf elektrochemischem Weg, **dadurch gekennzeichnet, dass** das aromatische Diazoniumsalz mit einem Nitrorest substituiert ist und dass die elektrochemische Reduktion bis zur Reduktion des Nitrorestes zum Aminorest aufrechterhalten wird.

**19.** Verfahren nach einem der Ansprüche 13 bis 18, wobei die elektrochemische Reduktion des Diazoniumsalzes in einem aprotischen Lösungsmittel stattfindet, das insbesondere ausgewählt ist aus der Gruppe umfassend Acetonitril, Dimethylformamid, Dimethylsulfoxid und Benzonitril.

**20.** Verfahren nach Anspruch 19, **dadurch gekennzeichnet, dass** die Lösung des Diazoniumsalzes einen Leitelektrolyten aufweist, der aus einem quartären Ammoniumsalz oder einem Lithiumsalz besteht, insbesondere einem Tetraalkylammoniumtetrafluoborat.

**21.** Verfahren nach einem der Ansprüche 13 bis 18, wobei die elektrochemische Reduktion des organischen Diazoniumsalzes in einem protischen Lösungsmittel in saurem Milieu stattfindet.

**22.** Verfahren nach Anspruch 21, **dadurch gekennzeichnet, dass** das protische Lösungsmittel ausgewählt ist aus der Gruppe bestehend aus Wasser, Methanol, Ethanol oder Mischungen davon, oder dass das protische Lösungsmittel mit einem aprotischen Lösungsmittel gemischt ist, wobei die resultierende Mischung die Eigenschaften eines protischen Lösungsmittels aufweist.

**23.** Verfahren nach einem der Ansprüche 21 oder 22, **dadurch gekennzeichnet, dass** die Säure aus Schwefelsäuren, Salzsäure, Salpetersäure, salpetriger Säure, Phosphorsäure oder Tetrafluoroborsäure ausgewählt ist.

**24.** Verfahren nach einem der Ansprüche 21 bis 23, **dadurch gekennzeichnet, dass** der pH-Wert der Lösung unter 2 liegt.

**25.** Metallisches Material wie es bei Durchführung des Verfahrens nach einem der Ansprüche 13 bis 24 erhalten wird.

Figure 1 a

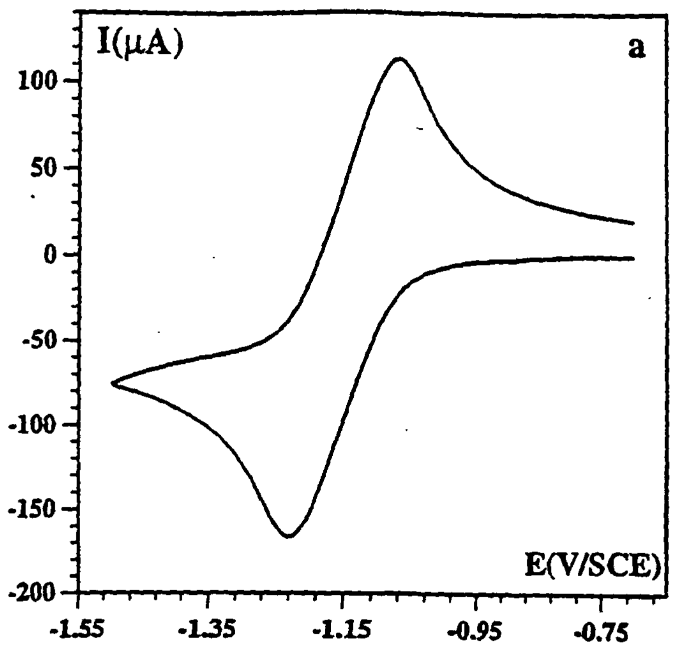


Figure 1 b

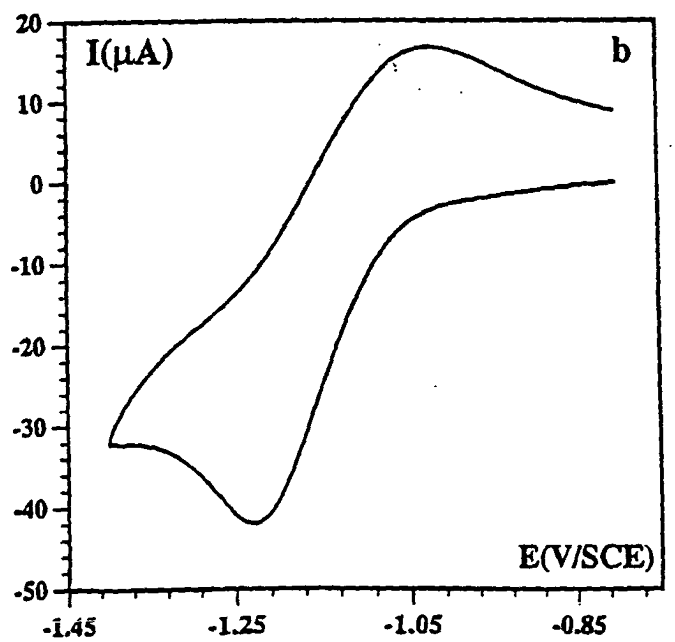

Figure 1 c

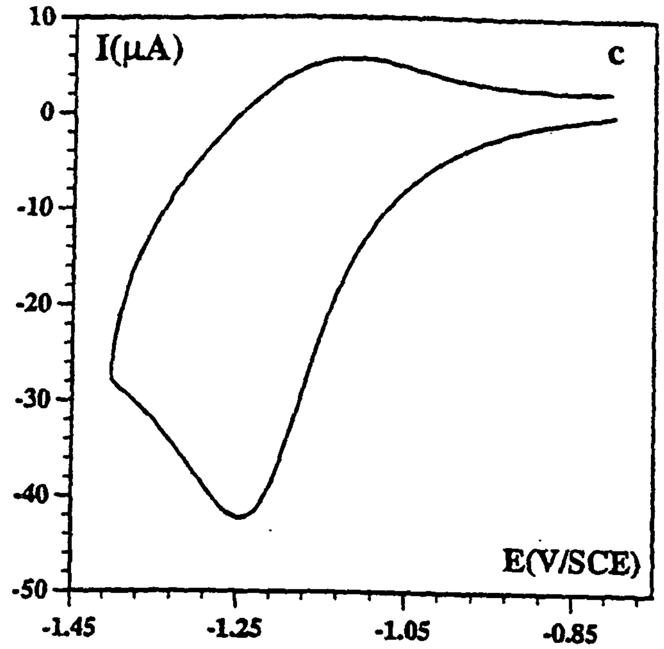

Figure 2 a

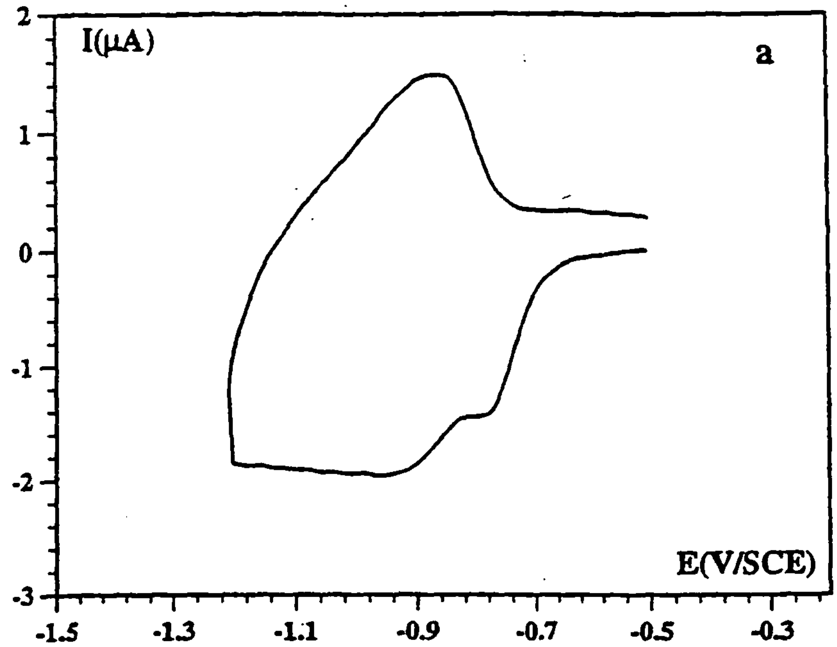


Figure 2 b

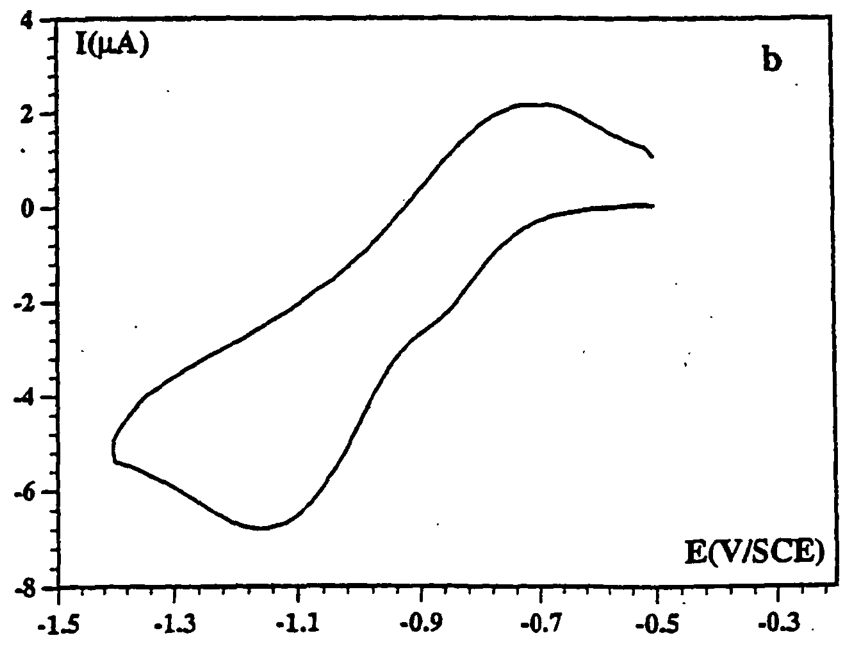

Figure 3 a

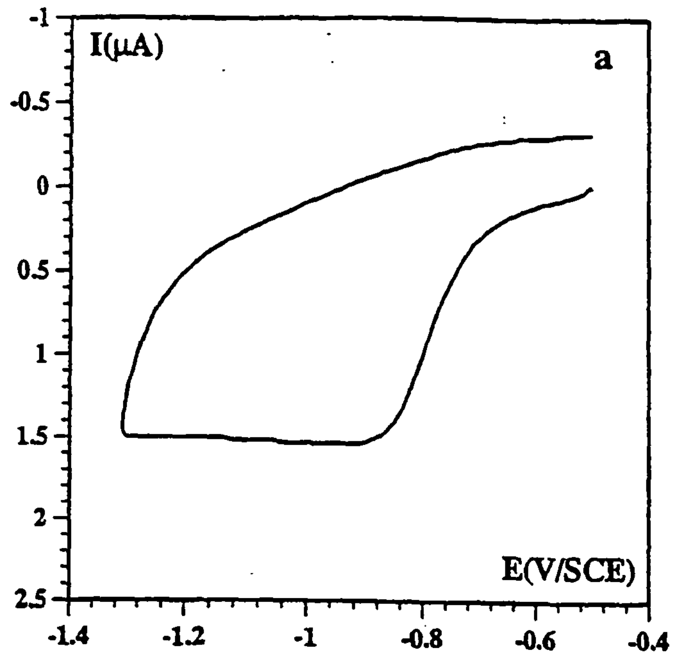


Figure 3 b

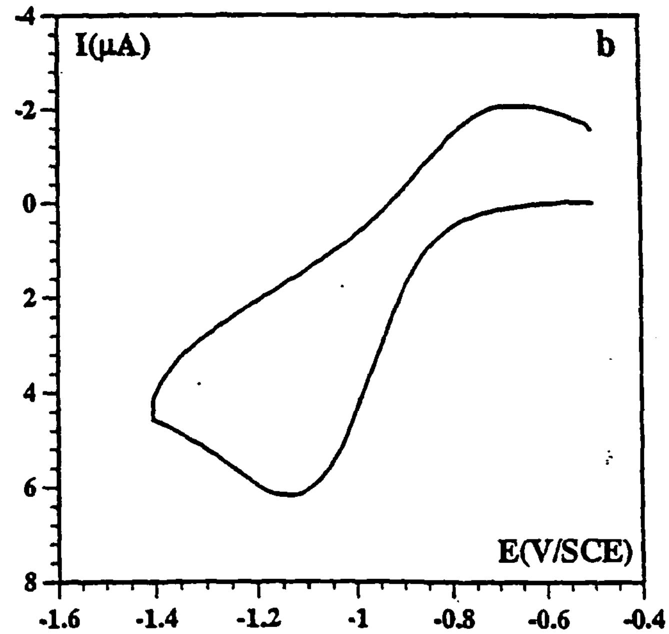

**Figure 4 a**

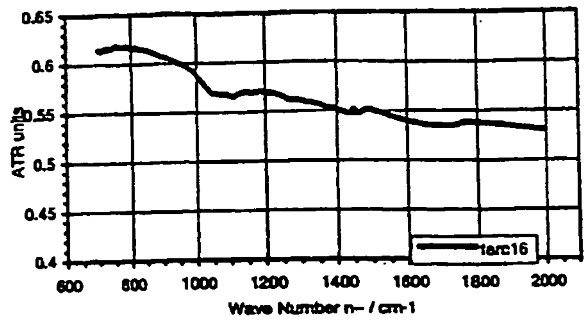


**Figure 4 b**

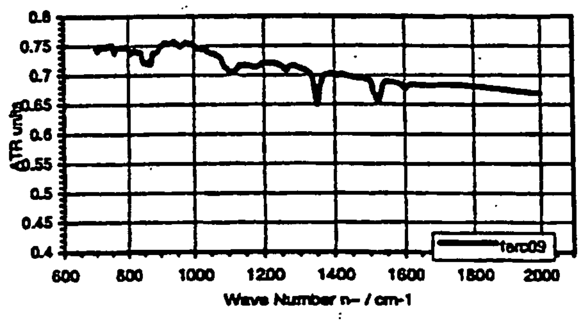


**Figure 4 c**

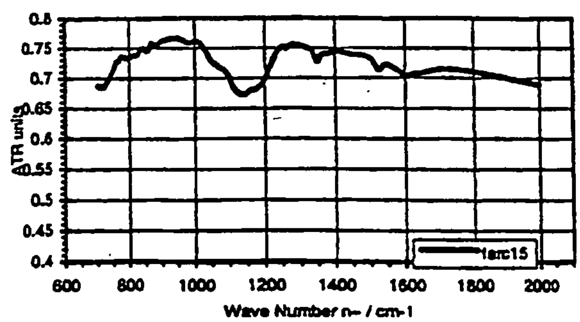

Figure 5

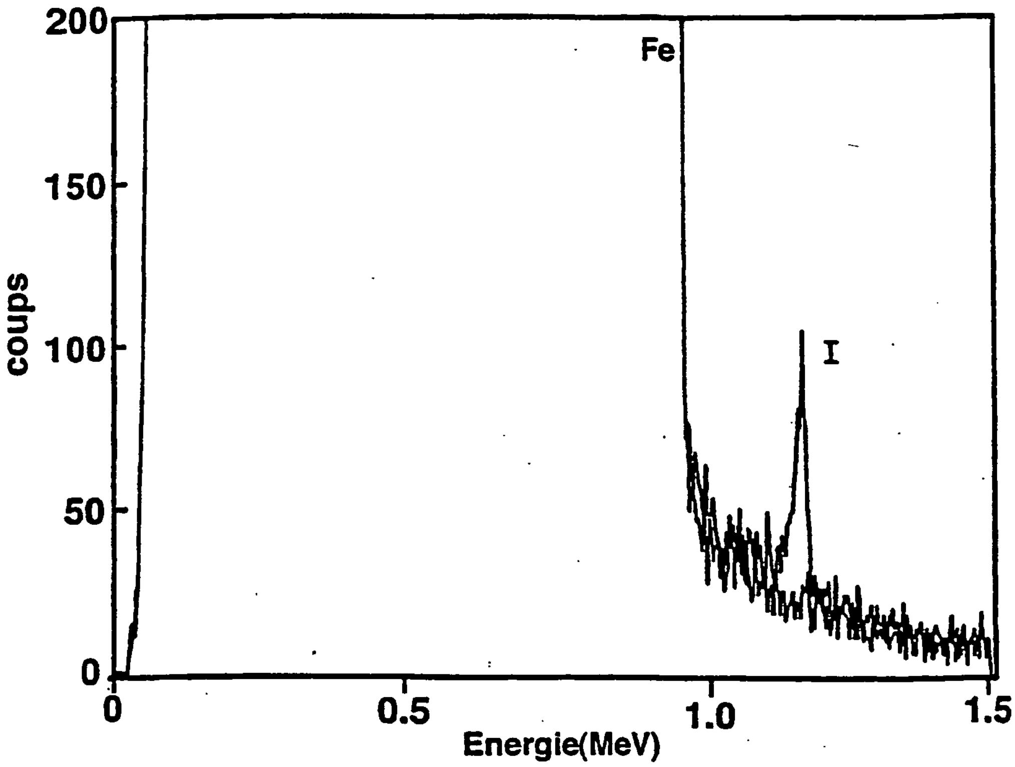

Figure 6 a

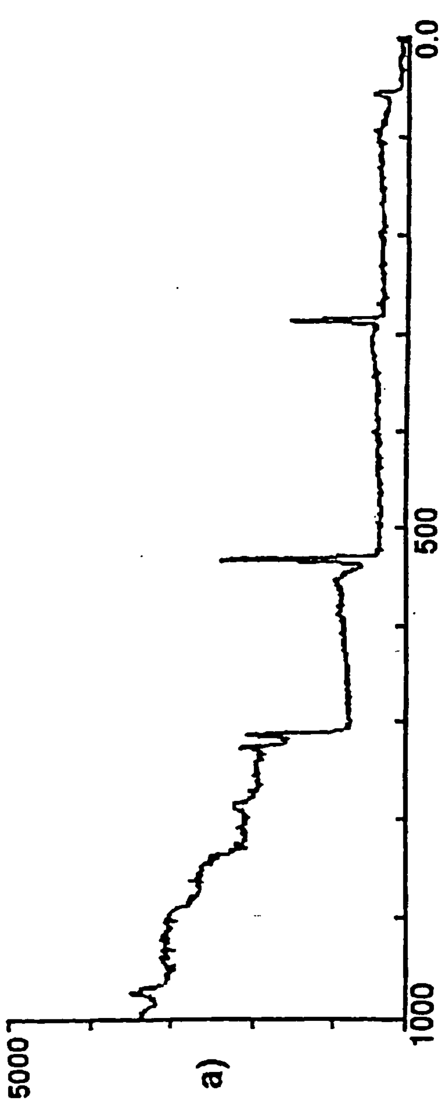


Figure 6 b

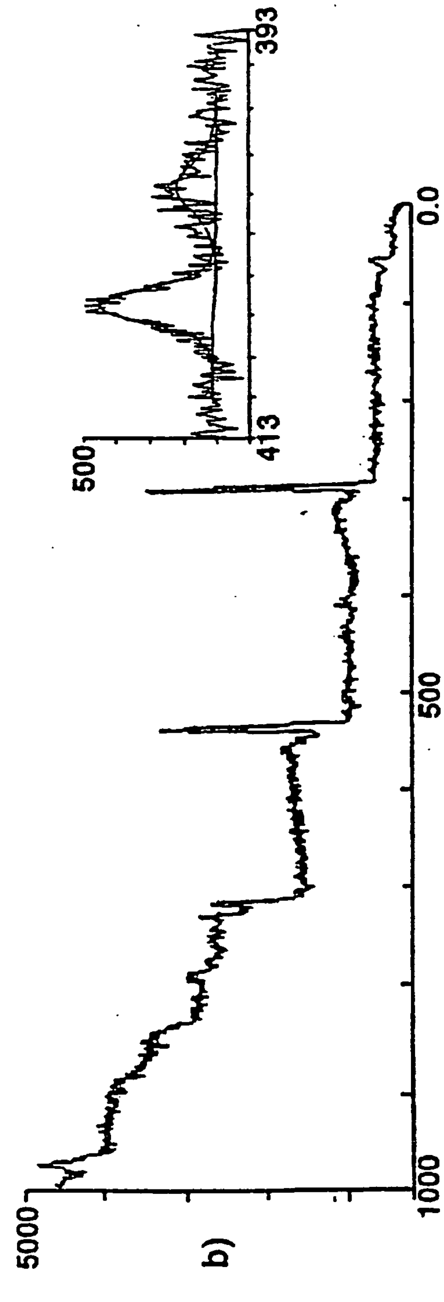

Figure 6 c

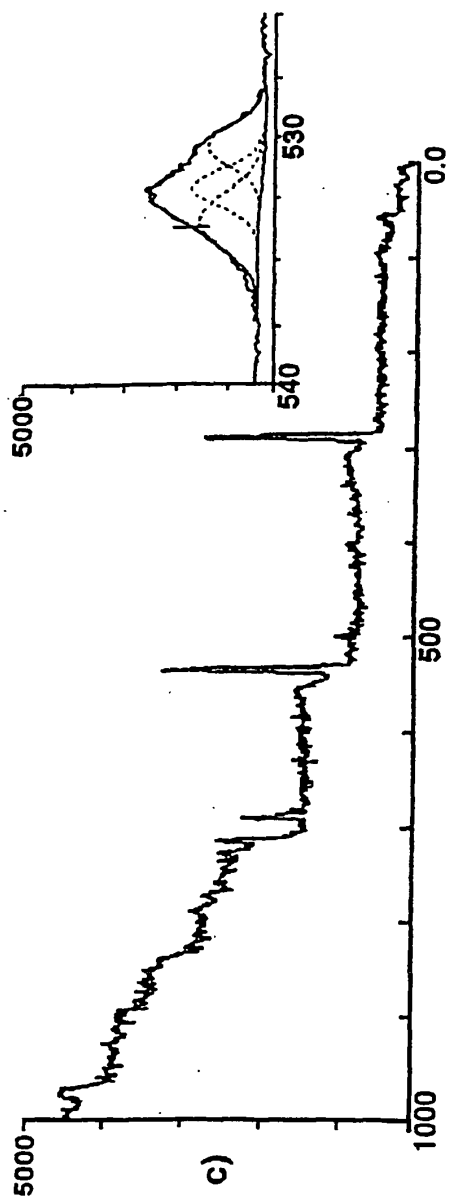


Figure 6 d

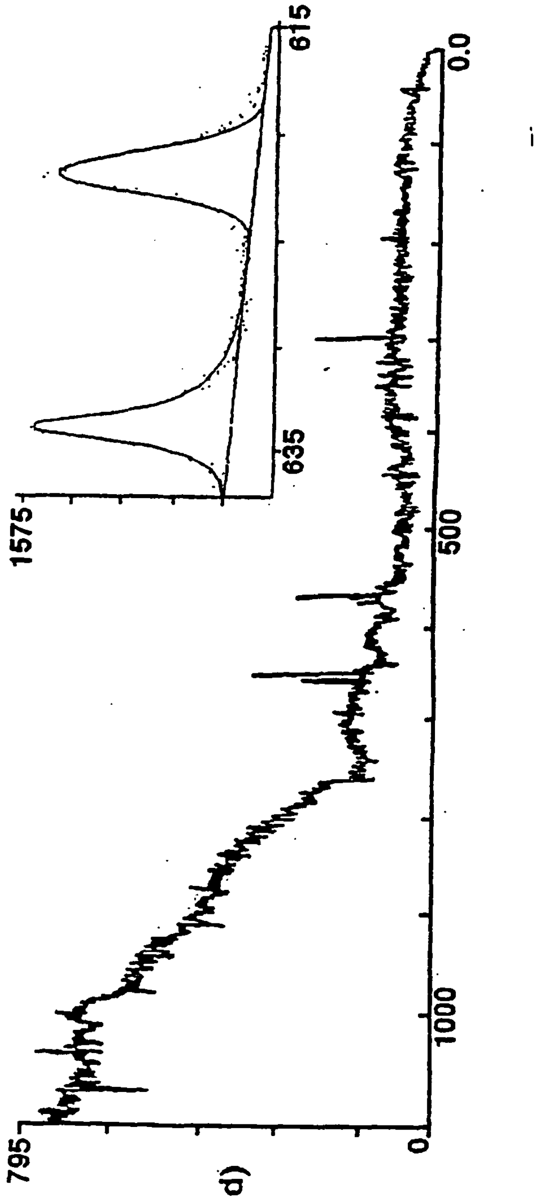

Figure 7

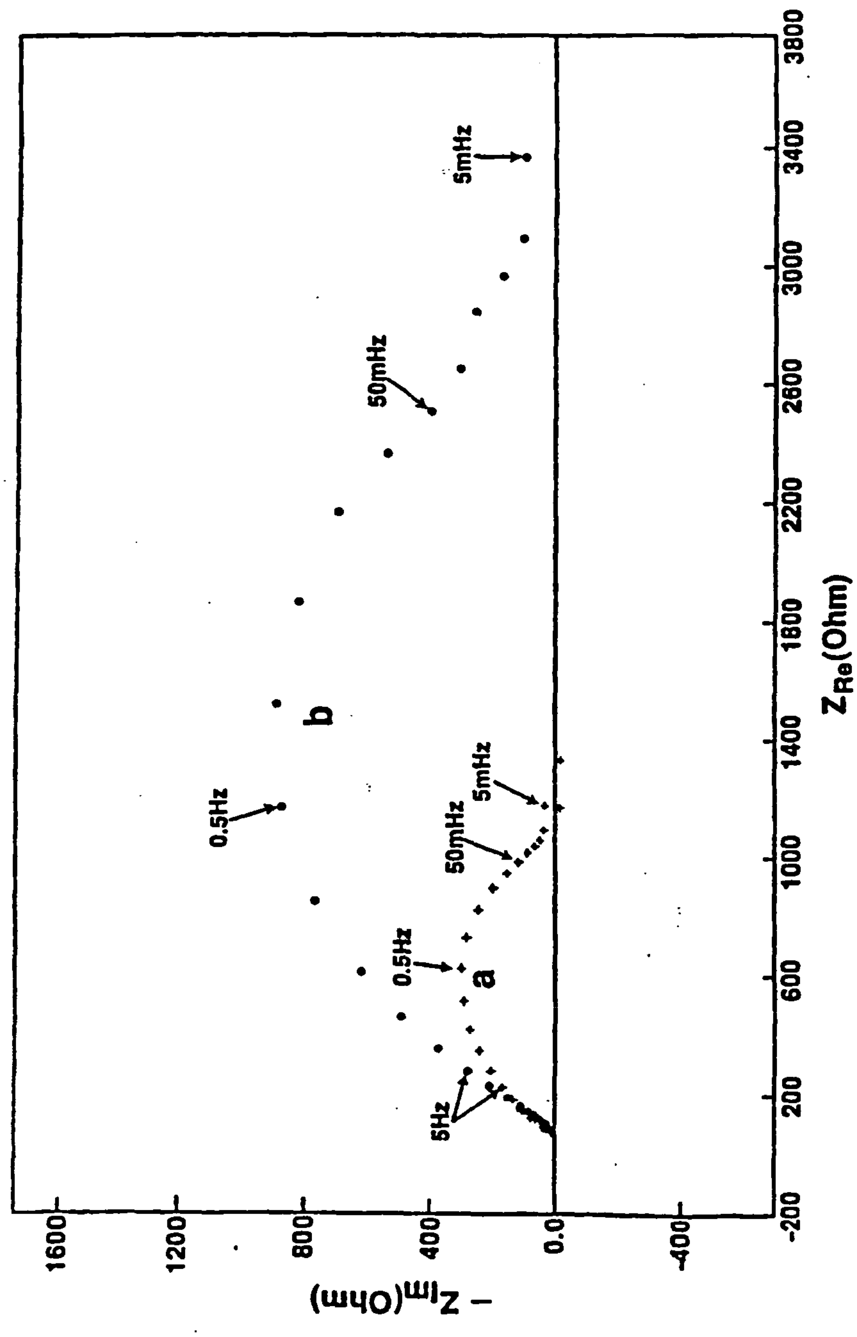
- $Z_{Im}$(Ohm)
$Z_{Re}$(Ohm)
a
b
5Hz
0.5Hz
50mHz
5mHz
0.5Hz
50mHz
5mHz
1600
1200
800
400
0.0
-400
-200
200
600
1000
1400
1800
2200
2600
3000
3400
3800

Figure 8 a

Figure 8 b

Figure 8 c

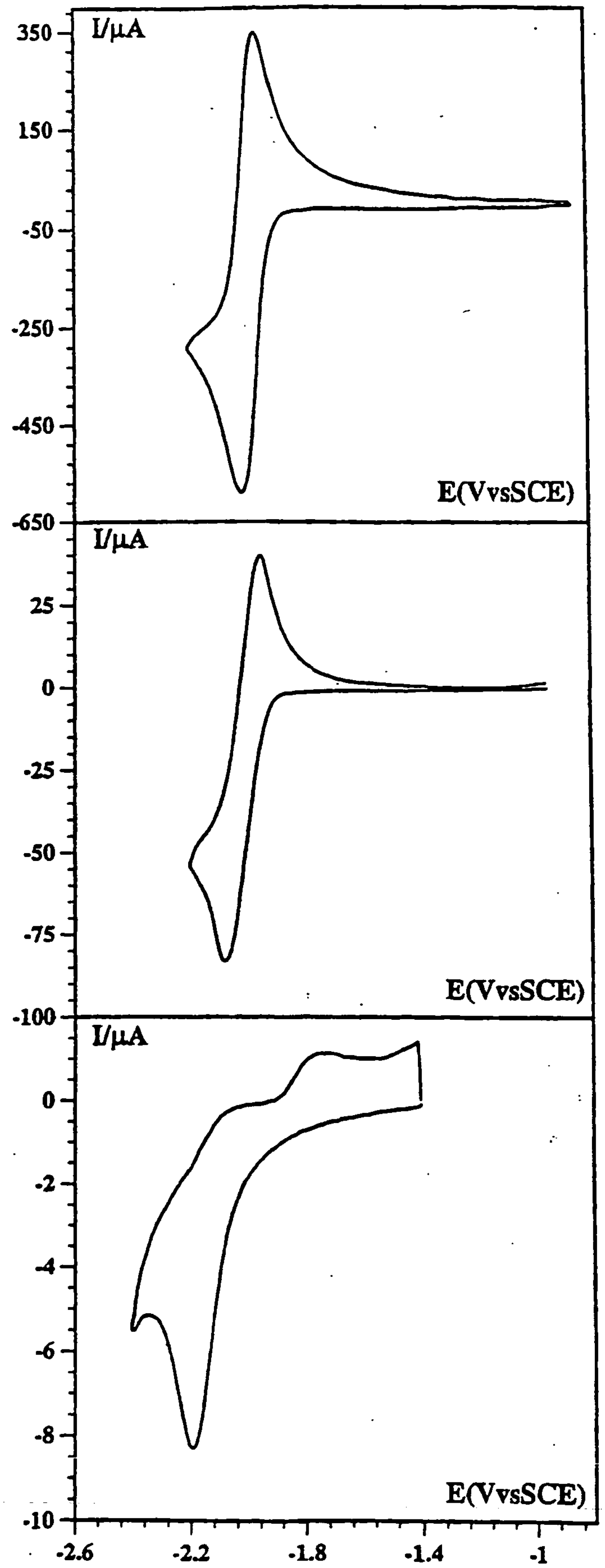

Figure 9 a

Figure 9 b

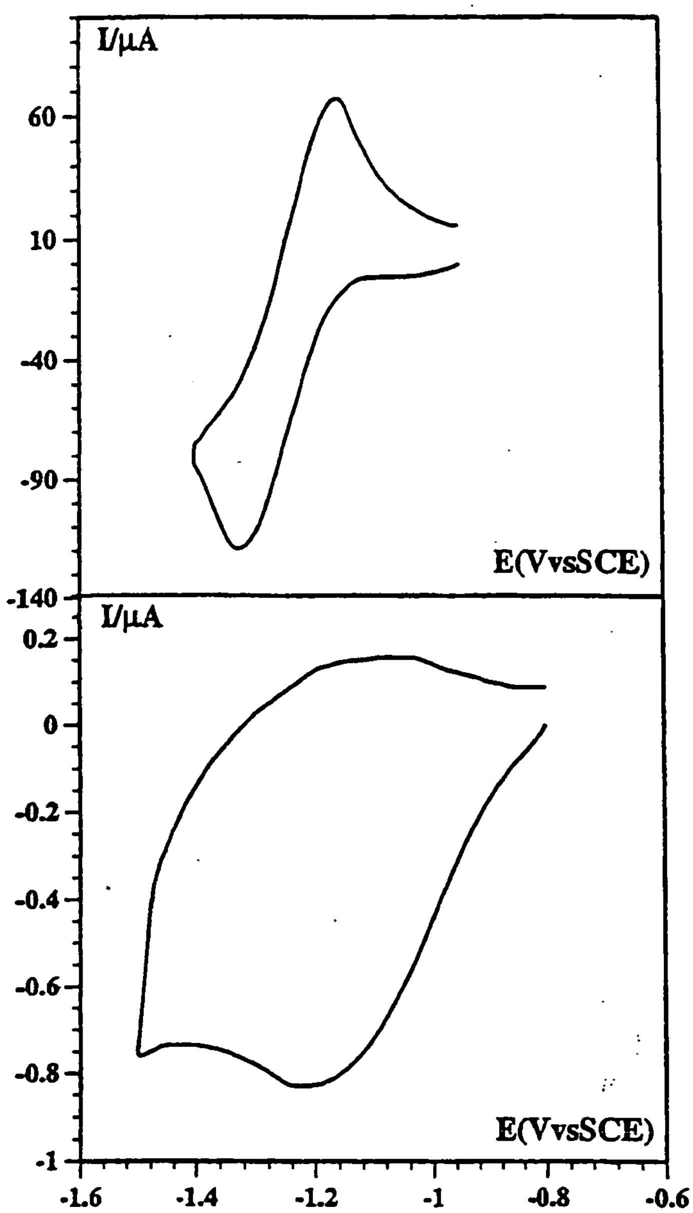

Figure 10 a

Figure 10 b

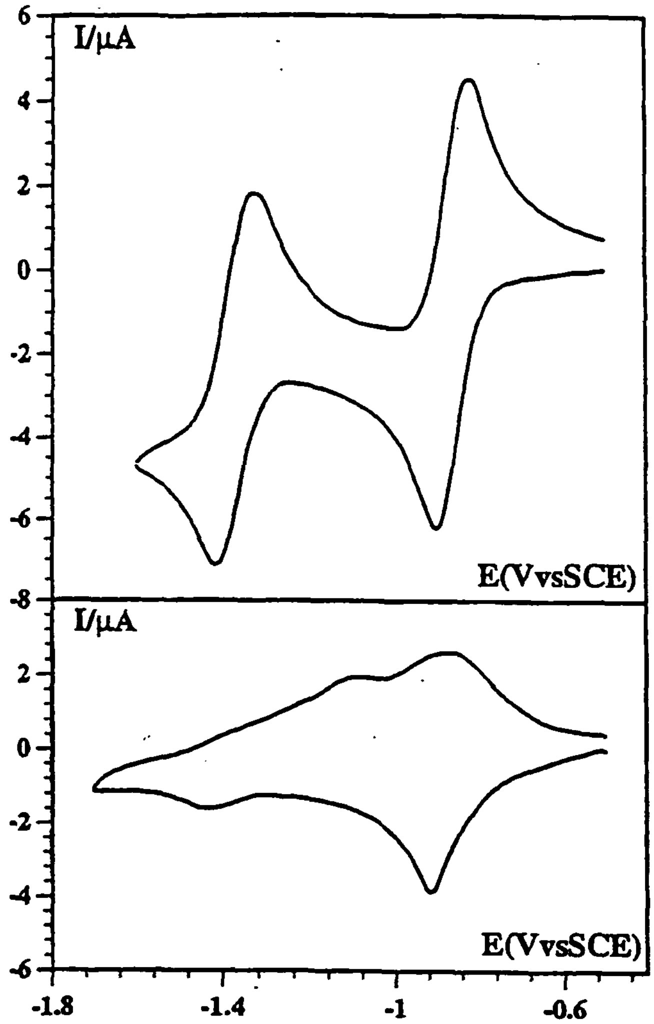

Figure 11 a

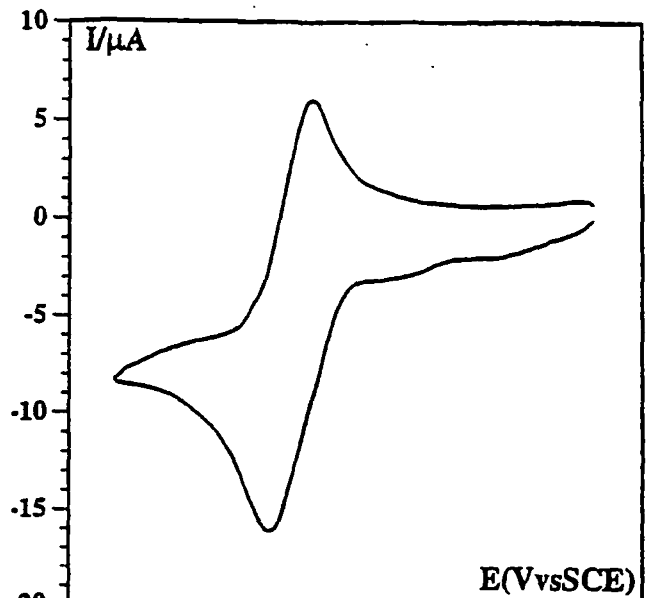


Figure 11 b

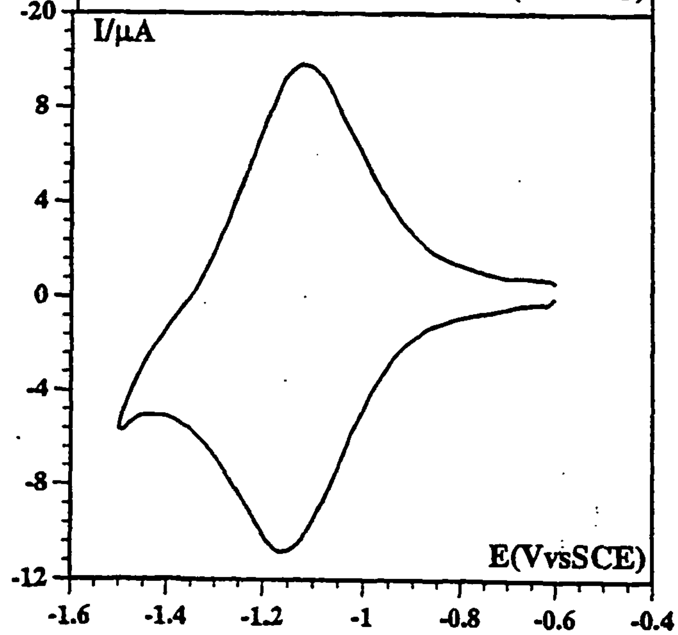

Figure 12 a

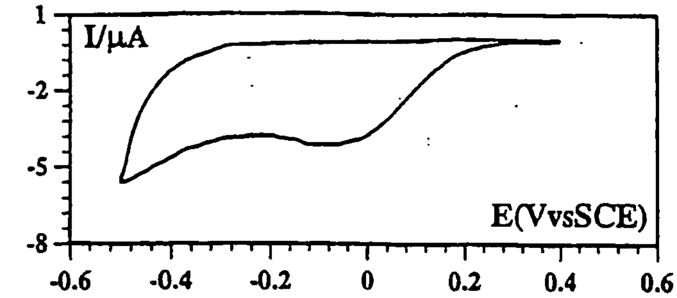


Figure 12 b

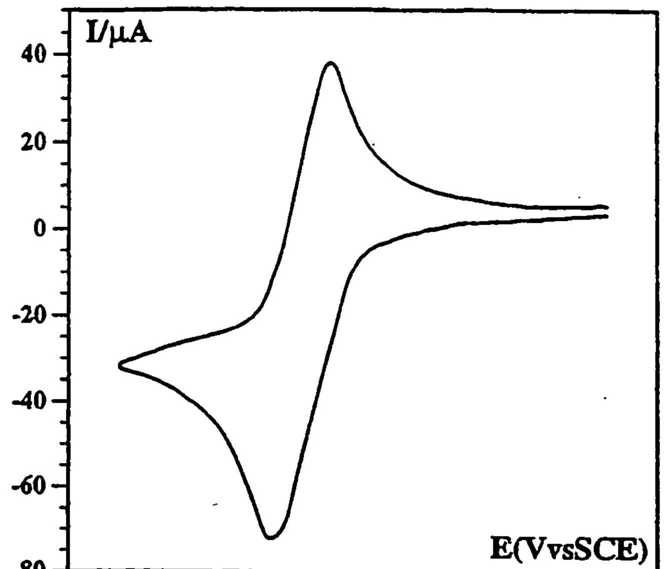


Figure 12 c

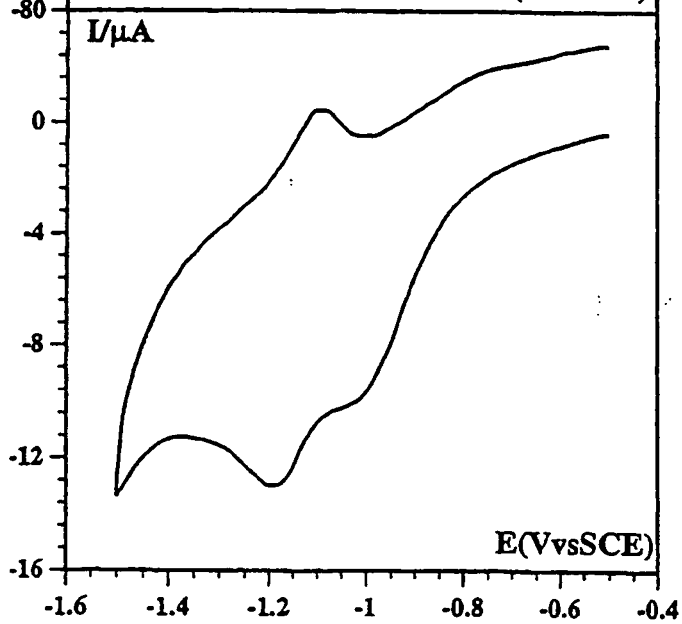

Figure 13 a

Figure 13 b

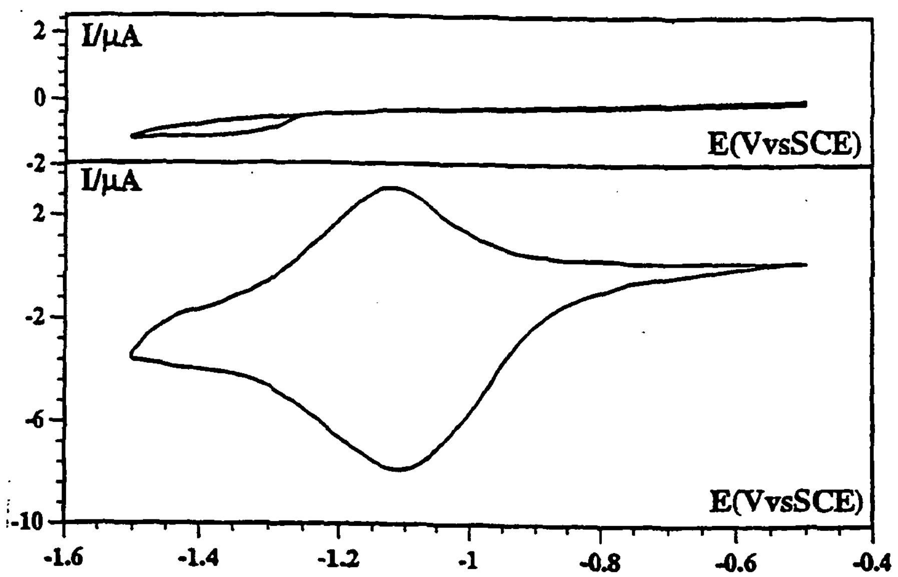

Figure 14 a

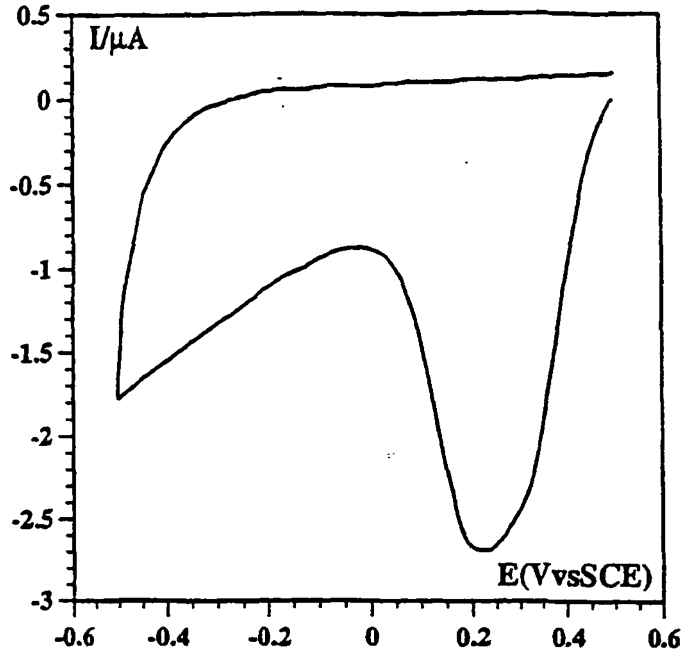


Figure 14 b

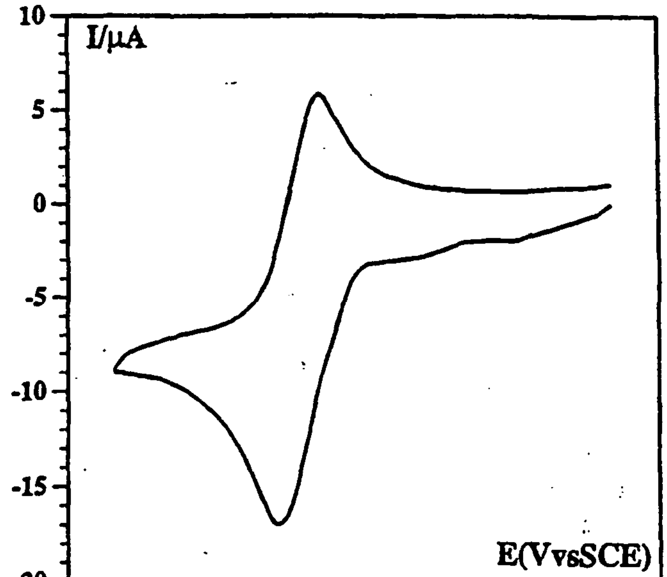


Figure 14 c

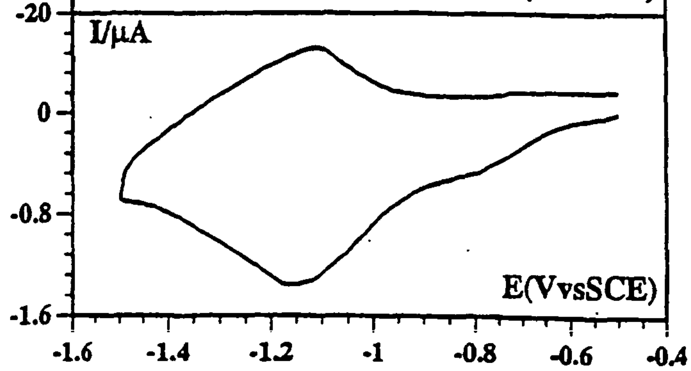

Figure 15 a

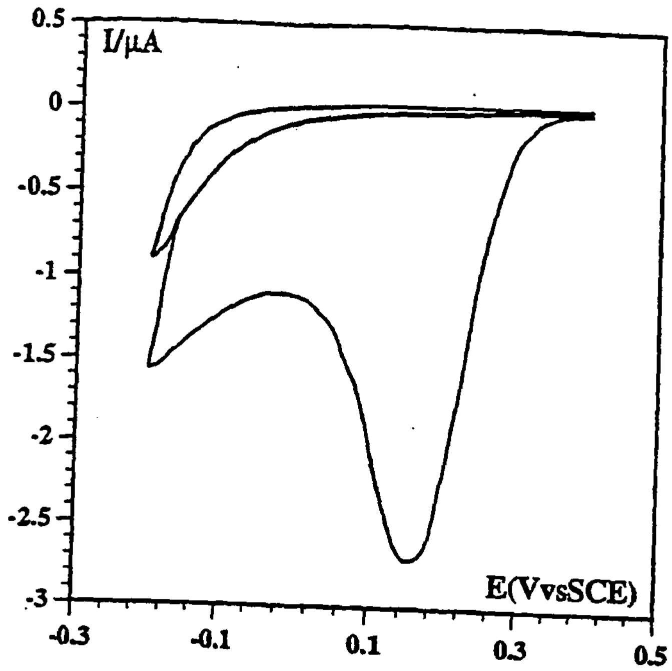

**Figure 15 b**

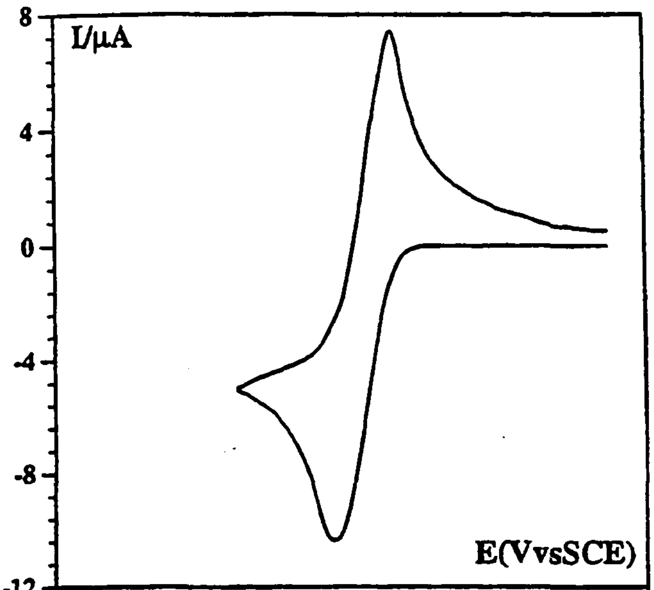


**Figure 15 c**

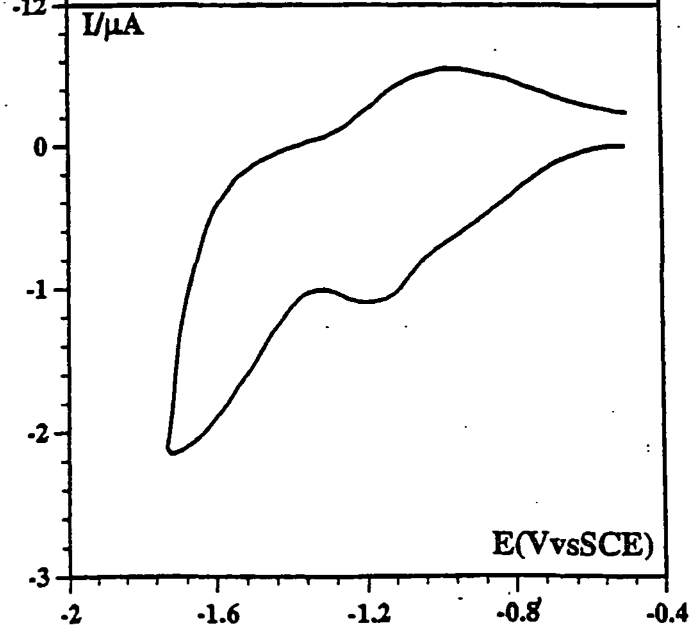

Figure 16 a

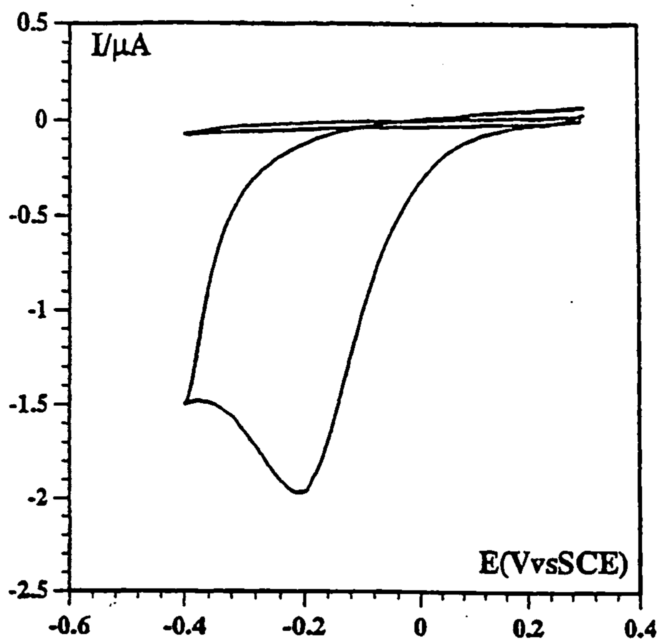


Figure 16 b

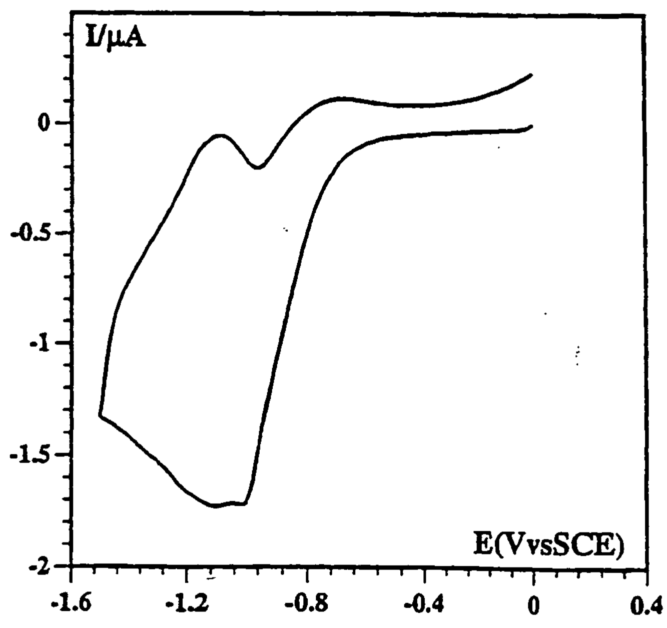

**Figures 17 a**

a)

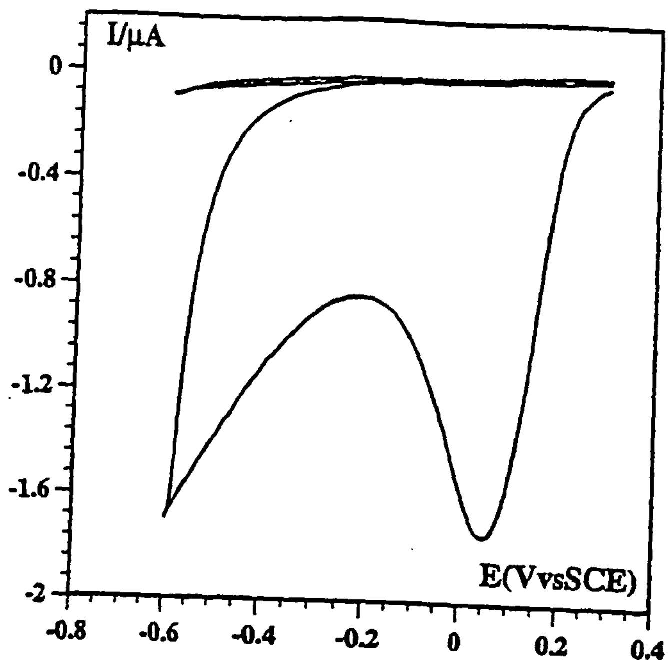

Figure 17 b

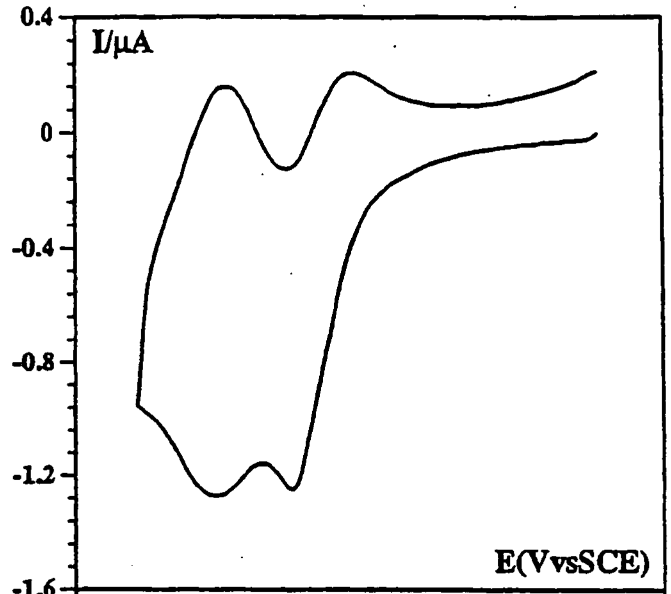


Figure 17 c

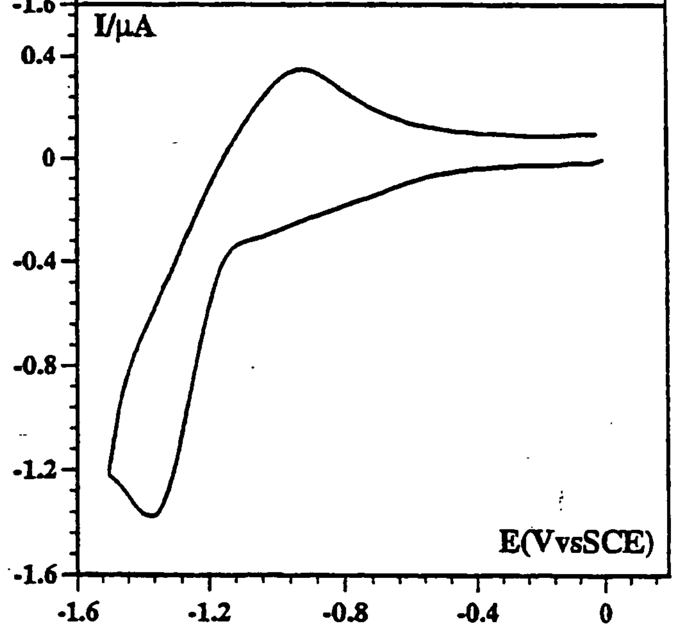

Figure 18

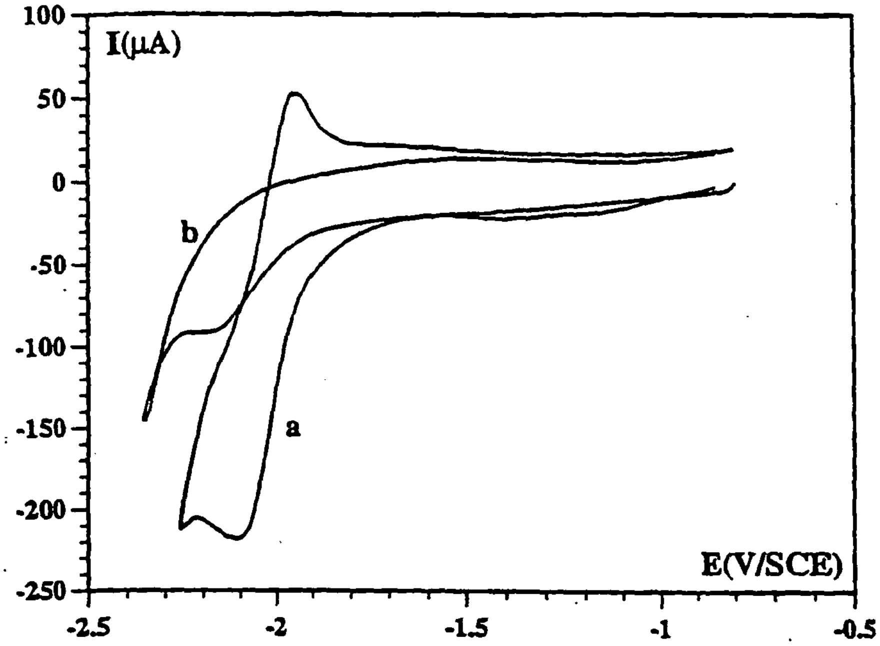

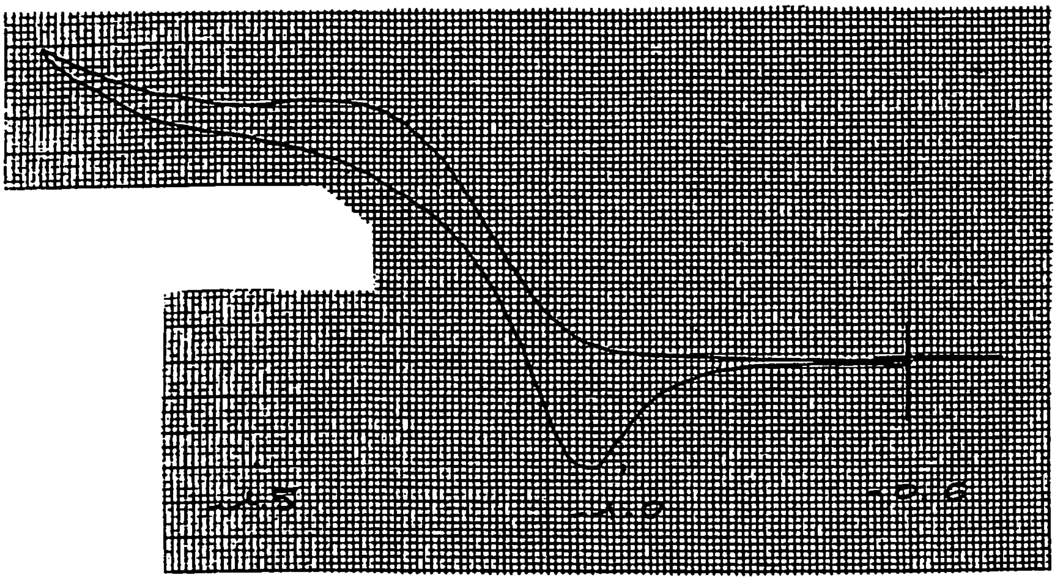

Electrode de fer de diamètre 1 mm
Référence ECS

X : 100 mV/cm
Y : 5 µA/cm

v = 100 mV/s

FIGURE 19

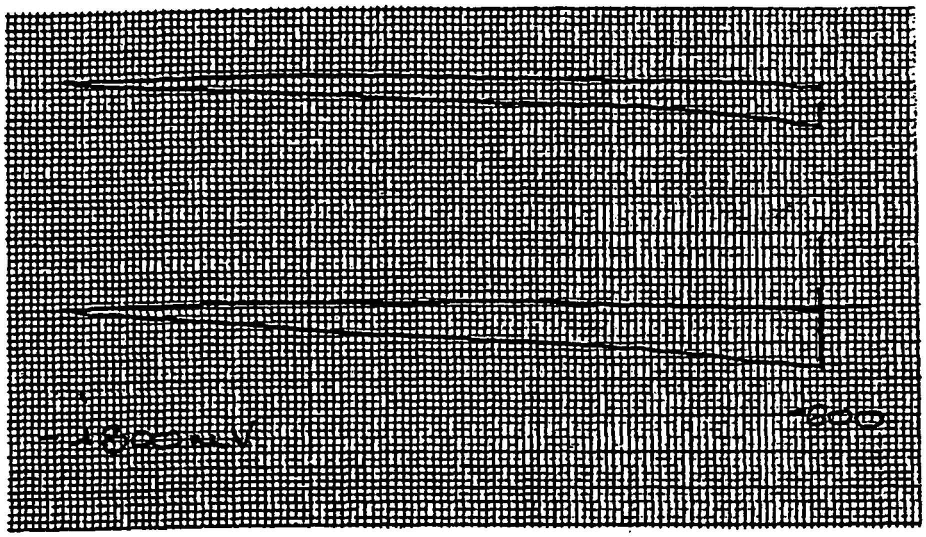


Electrode de fer de diamètre 1 mm
Référence ECS

X : 100 mV/cm
Y : 0,8 µA/cm

v = 100 mV/s

FIGURE 20

FIGURE 21 A

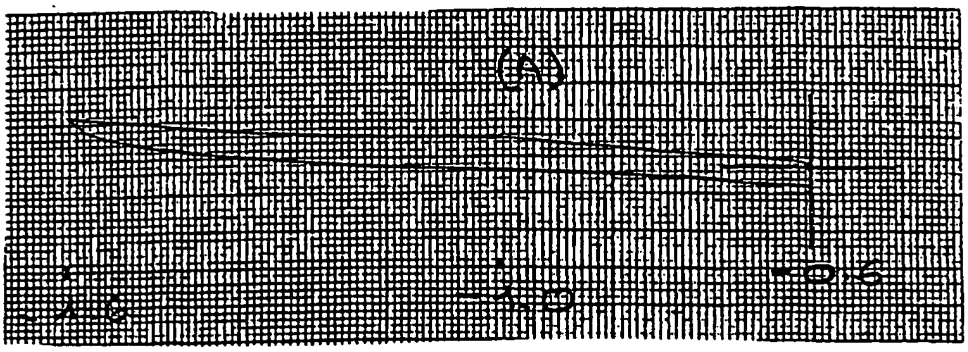


Electrode de fer de diamètre 1 mm
Référence ECS

X : 100 mV/cm
Y : 0,8 µA/cm

v = 100 mV/s

FIGURE 21 B

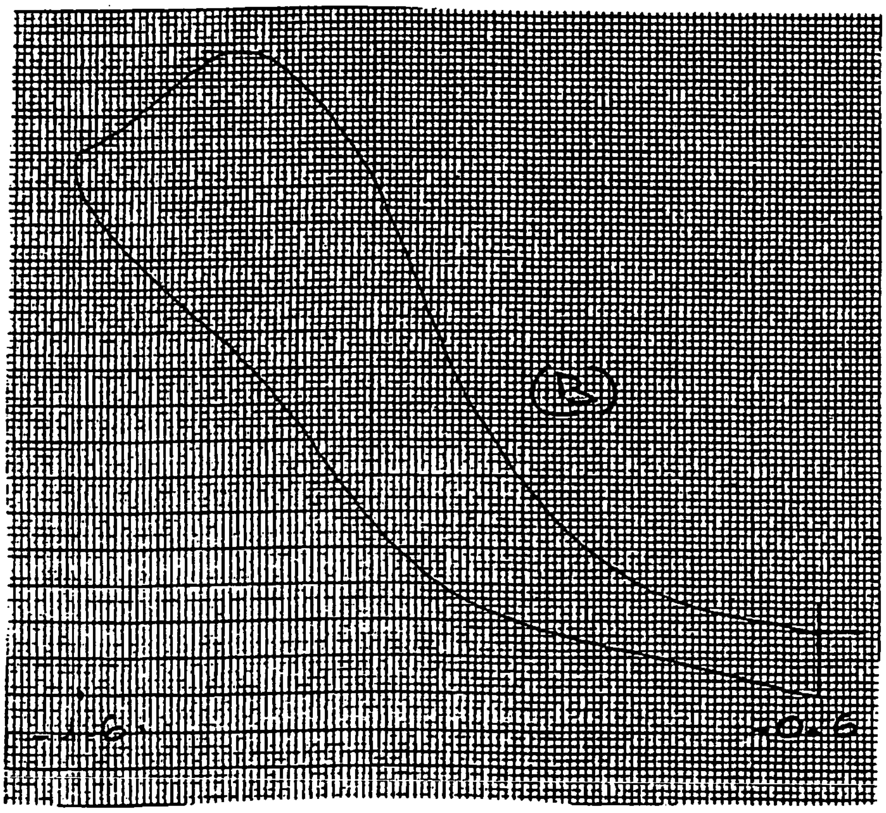


X : 100 mV/cm
Y : 0,8 µA/cm

v = 100 mV/s

Electrode de fer de diamètre 1 mm
Référence ECS

**FIGURE 22 a**

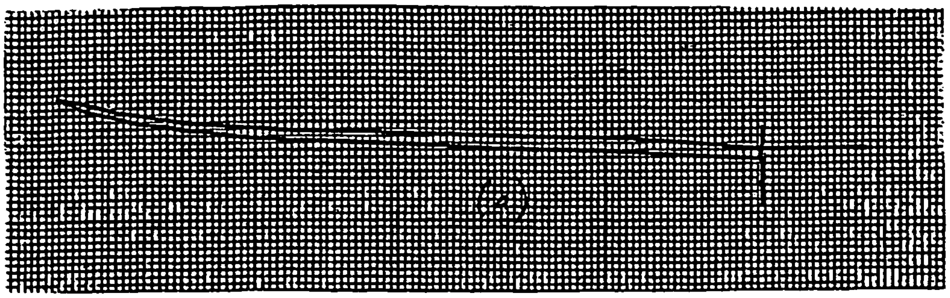

Electrode de fer de diamètre 1 mm
Référence ECS

X : 100 mV/cm
Y : 0,8 μA/cm

v = 100 mV/s

**FIGURE 22 b**

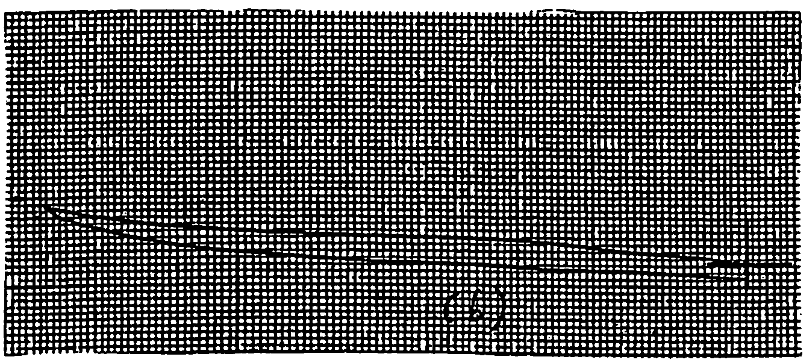

Electrode de fer de diamètre 1 mm
Référence ECS

v = 300 mV/s

X : 100 mV/cm
Y : 0,8 μA/cm